# EUROPEAN PATENT APPLICATION

(11) **EP 4 647 566 A1**
(43) Date of publication of application: **12.11.2025**
(21) Application number: 24777817.8
(22) Date of filing: 20.03.2024
(51) Int. Cl.: E04G 3/28, E04G 5/04, B66C 23/28

(54) **SAME-LAYER FRAMEWORK MUTUAL-CLIMBING-TYPE AUTOMATIC RAISING/LOWERING SUPPORT SYSTEM, CLIMBING APPARATUS THEREOF, AND RAISING/LOWERING METHOD THEREFOR**

(30) Priority: 27.03.2023 CN 202310304775
(71) Applicant: China Construction Third Engineering Bureau Group Co., Ltd., Wuhan, Hubei 430074 (CN)
(72) Inventor: WANG, Kaiqiang, Wuhan, Hubei 430074 (CN); YAO, Tao, Wuhan, Hubei 430074 (CN); SUN, Qing, Wuhan, Hubei 430074 (CN); LIU, Wei, Wuhan, Hubei 430074 (CN); YANG, Hui, Wuhan, Hubei 430074 (CN); HUANG, Lei, Wuhan, Hubei 430074 (CN); LI, Xia, Wuhan, Hubei 430074 (CN); LIU, Yongbo, Wuhan, Hubei 430074 (CN)
(74) Representative: Herrmann, Uwe
(86) International application number: PCT/CN2024/082649
(87) International publication number: WO 2024/199028

(57) **Abstract**

Disclosed are a same-storey framework-type mutual-climbing-type automatic raising/lowering support system, a climbing apparatus thereof, and a raising/lowering method therefor. The climbing apparatus of the same-storey framework mutual-climbing-type automatic raising/lowering support system includes: a load-bearing member, a climbing frame, a telescoping mechanism, and a support frame, where the climbing frame and the support frame can be hung on an outer side of the same load-bearing member; a guide structure is arranged between the climbing frame and the support frame to achieve mutual-guided climbing; a buffer balancing mechanism is arranged above the support frame; and the telescoping mechanism includes a cylinder body and a telescoping rod, where a bottom of the telescoping rod is movably connected to a bottom of the climbing frame via a rotating structure; the cylinder body passes through an inner cavity of the support frame; an upper flange is fixed above the cylinder body to abut against a top end surface of the buffer balancing mechanism; a lower flange is fixed below the cylinder body to abut against a bottom end surface of the support frame; and the cylinder body and the support frame can move horizontally. The climbing apparatus of the same-storey framework mutual-climbing-type automatic raising/lowering support system disclosed herein integrates three functions: a same-storey framework, mutual-guided climbing, and proper alignment.

## Description

### TECHNICAL FIELD

The present invention relates to the technical field of top formwork construction, and in particular, to a same-storey framework mutual-climbing-type automatic raising/lowering support system, a climbing apparatus thereof, and a raising/lowering method therefor.

### BACKGROUND

Integrated top formwork construction platforms used for (super) high-rise building structure construction have good load-bearing capacity and construction equipment integration capabilities.

However, in the prior art, multi-storey main concrete structures are typically employed to install existing automatic raising/lowering support systems, meaning that the automatic raising/lowering support systems can only be installed after at least two storeys of the main concrete structures have been constructed. Additionally, the automatic raising/lowering support systems occupy multiple storeys, hindering subsequent construction work such as construction of secondary structures and plastering of exterior walls.

Furthermore, during raising/lowering operations, existing automatic raising/lowering support systems are prone to significant displacement and deformation due to multiple influences including installation deviations, structural construction deviations, and heavy construction loads. The weak adaptability of these automatic raising/lowering support systems to deviations results in inaccurate positioning during raising/lowering operations. Consequently, existing automatic raising/lowering support systems require substantial time and manpower to correct positional deviations.

### SUMMARY

The present invention is mainly intended to provide a same-storey framework mutual-climbing-type automatic raising/lowering support system, a climbing apparatus thereof, and a raising/lowering method therefor, aiming to achieve same-storey climbing of a support frame and a climbing frame, thereby enabling earlier involvement of an integrated construction platform in construction of main concrete structures.

To achieve the aforementioned purposes, the present invention provides a climbing apparatus of a same-storey framework mutual-climbing-type automatic raising/lowering support system, including a load-bearing member, a climbing frame, a telescoping mechanism, and a support frame, where
the climbing frame and the support frame can be hung on an outer side of the same load-bearing member; a guide structure is arranged between the climbing frame and the support frame to achieve mutual-guided climbing; a buffer balancing mechanism is arranged above the support frame; and the telescoping mechanism includes a cylinder body and a telescoping rod, where a bottom of the telescoping rod is movably connected to a bottom of the climbing frame via a rotating structure; the cylinder body passes through an inner cavity of the support frame; an upper flange is fixed above the cylinder body to abut against a top end surface of the buffer balancing mechanism; a lower flange is fixed below the cylinder body to abut against a bottom end surface of the support frame; and the cylinder body and the support frame can move horizontally.

Preferably, the buffer balancing mechanism is a spring box, including a hollow seat body, a cover body covering the seat body, and a spring located inside the seat body, where a relative distance between the seat body and the cover body is adjusted via the spring.

Preferably, the spring box further includes a guide shaft fixed on the seat body and a limit bolt passing through side surfaces of both the seat body and the cover body, where the spring is sleeved outside the guide shaft; a limit hole is formed in the side surface of the cover body for the limit bolt to pass through, such that the limit bolt restricts a maximum displacement of the cover body when the cover body moves relative to the seat body; and the seat body and the cover body are hollow to allow the cylinder body to pass through.

Preferably, the support frame is accommodatable in a recess formed by the climbing frame, enabling the climbing frame and the telescoping mechanism to be simultaneously hung on the outer side of the same load-bearing member; the load-bearing member is provided with an outer claw shoe assembly and a first flipping claw assembly; the climbing frame is provided with a second flipping claw assembly engaged with a support arm of the outer claw shoe assembly; and the support frame is provided with an inner claw shoe engaged with the first flipping claw assembly.

Preferably, a height of the load-bearing member corresponds to one storey height of a concrete wall; flipping claws of both the second flipping claw assembly and the first flipping claw assembly are provided with a locking mechanism to lock rotation thereof; and an elastic material layer is mounted on contact surfaces of the flipping claws via a fastener.

Preferably, the locking mechanism includes a limit baffle; a pivot shaft is inserted through the flipping claws to enable rotation thereof, with a limit groove disposed at a head of the pivot shaft; the limit baffle is inserted into the limit groove to restrict rotation of the pivot shaft; a width of the flipping claw of the first flipping claw assembly is smaller than a width of a slot of the inner claw shoe; and a width of the flipping claw of the second flipping claw assembly is smaller than a width of the support arm of the outer claw shoe assembly.

Preferably, the climbing frame includes two side plates and a base connecting the two side plates; the support frame is located within a concave space formed by the two side plates and the base and is hung on the outer side of the load-bearing member; a mounting slot is formed on the base, with the rotating structure adjustably positioned within the mounting slot; and the guide structure includes a guide assembly disposed on a side surface of the support frame and guide grooves disposed on mutually facing sides of the two side plates of the climbing frame, where the guide assembly is accommodated within the guide grooves to guide raising/lowering of the support frame.

The present invention further proposes a same-storey framework mutual-climbing-type automatic raising/lowering support system, including the climbing apparatus described above, and further including a support column, where a bottom end of the support column is rigidly connected to the upper flange of the cylinder body of the telescoping mechanism; and a top end of the support column is rigidly connected to a steel construction platform.

The present invention further proposes a raising method for the same-storey framework mutual-climbing-type automatic raising/lowering support system, including the following steps:
controlling the cylinder body of the telescoping mechanism to rise, where the lower flange below the cylinder body abuts against the bottom end surface of the support frame to drive the entire support frame to ascend;
after the support frame ascends in place, retracting the cylinder body downward and engaging the first flipping claw assembly with the inner claw shoe to hang the support frame on the outer side of the load-bearing member;
controlling the telescoping rod of the telescoping mechanism to retract relative to the cylinder body, thereby driving the entire climbing frame to ascend; and
after the climbing frame ascends in place, causing the flipping claw of the second flipping claw assembly to rest on the outer claw shoe assembly of the load-bearing member by extending the telescoping rod downward, thereby hanging the climbing frame on the outer side of the load-bearing member.

The present invention further proposes a lowering method for the same-storey framework mutual-climbing-type automatic raising/lowering support system, including the following steps:
controlling the telescoping rod of the telescoping mechanism to extend upward to drive the climbing frame to ascend, thereby causing the flipping claw of the second flipping claw assembly to be disengaged from the outer claw shoe assembly, rotating the flipping claw of the second flipping claw assembly to retract it into the climbing frame before locking it, and then controlling the telescoping rod of the telescoping mechanism to extend downward to drive the climbing frame to descend;
after the climbing frame descends in place, unlocking the flipping claw of the second flipping claw assembly, thereby causing it to naturally extend into a horizontal state, and controlling the telescoping rod to move, thereby causing the flipping claw of the second flipping claw assembly to rest above the outer claw shoe assembly;
controlling the cylinder body to extend upward, thereby causing the flipping claw of the first flipping claw assembly to be disengaged from the inner claw shoe, rotating the flipping claw of the first flipping claw assembly to retract it into the load-bearing member before locking it, and then controlling the cylinder body to move downward to drive the support frame to descend; and
after the support frame descends in place, unlocking the flipping claw of the first flipping claw assembly, thereby causing it to naturally extend into a horizontal state, and controlling the cylinder body of the telescoping mechanism to move to engage the flipping claw of the first flipping claw assembly with the slot of the inner claw shoe, thereby hanging the climbing frame on the outer side of the load-bearing member.

The same-storey framework mutual-climbing-type automatic raising/lowering support system proposed by the present invention has the following beneficial effects:
1: the same-storey framework mutual-climbing-type automatic raising/lowering support system integrates three functions in a structure: a same-storey framework, mutual-guided climbing, and proper alignment. The same-storey framework means that the climbing frame and the support frame can be hung on the outer side of the same load-bearing member, allowing installation of the automatic raising/lowering support system after just one storey of the main concrete structure is constructed. Additionally, the automatic raising/lowering support system occupies only one storey, facilitating subsequent construction work such as construction of secondary structures and plastering of exterior walls. The mutual-guided climbing means that the climbing frame and the support frame guide each other during climbing. Specifically, this is achieved through the guide structure (guide grooves), the climbing frame arranged as an outer frame outside the support frame, and cooperation with the telescoping mechanism. When the climbing frame is not climbing, the support frame climbs using the climbing frame as a pivot point, and when the support frame is not climbing, the climbing frame climbs using the support frame as a pivot point. In this way, the mutual-guided climbing is achieved via the telescoping mechanism's connection coordinated with the guide structure. The proper alignment is achieved through two measures: first, the side plates of the climbing frame ensure that the support frame does not deviate excessively during ascending or descending; second, when minor misalignment occurs during installation, the width of the flipping claw of the first flipping claw assembly is smaller than the width of the slot of the inner claw shoe, and the width of the flipping claw of the second flipping claw assembly is smaller than the width of the support arm of the outer claw shoe assembly. Meanwhile, combined with inclined surface structures of the flipping claws, the climbing frame and the support frame utilise the action of gravity and the self-aligning inclined surface structures to eliminate positional deviations during positioning, thereby enabling automatic alignment between the climbing frame and the support frame into planar contact. When major misalignment occurs during installation, the support frame's position on the lower flange is adjusted through an external force, enabling engagement between the support frame's inner claw shoe and the first flipping claw assembly, while allowing adjustment of the second flipping claw's engagement position with the inner claw shoe. Consequently, this ensures precise positioning of the support frame on the load-bearing member during raising/lowering operations;
2: through the combined use of the spherical hinge structure and the buffer balancing mechanism, internal forces between structural members are effectively released during operation of the automatic raising/lowering support system. Coordinated with movable connection between the cylinder body and the support frame, these two features work together to: ensure accurate positioning of the support frame and the climbing frame on the load-bearing member during raising/lowering operations, and enhance adaptability of the raising/lowering operations to multiple influences including installation deviations, structural construction deviations, and heavy construction loads;
3: the automatic raising/lowering support system enables lowering functionality, which not only expands construction work types (providing working surfaces for subsequent construction work such as construction of secondary structures and plastering of exterior walls) but also facilitates ground-level disassembly of the steel construction platform (the steel construction platform can descend with the support frame to the building base, unlike conventional high-altitude disassembly); and
4: the same-storey framework mutual-climbing-type automatic raising/lowering support system has the advantages of simple structure, easy disassembly, and stable and reliable operation.

### BRIEF DESCRIPTION OF THE DRAWINGS

FIG. 1 is a schematic structural view of a same-storey framework mutual-climbing-type automatic raising/lowering support system according to the present invention;
FIG. 2a is a schematic front structural view of the same-storey framework mutual-climbing-type automatic raising/lowering support system with reusable concrete structure-embedded members and load-bearing members installed;
FIG. 2b is a schematic side structural view of FIG. 2a;
FIG. 3a is a schematic front structural view of a load-bearing member in the same-storey framework mutual-climbing-type automatic raising/lowering support system;
FIG. 3b is a schematic exploded structural view of the load-bearing member in the same-storey framework mutual-climbing-type automatic raising/lowering support system;
FIG. 3c is a schematic structural view of a first flipping claw assembly in the same-storey framework mutual-climbing-type automatic raising/lowering support system;
FIG. 3d is a schematic structural view of an outer claw shoe assembly in the same-storey framework mutual-climbing-type automatic raising/lowering support system;
FIG. 3e is a schematic structural view of a first rotating pivot shaft in the same-storey framework mutual-climbing-type automatic raising/lowering support system;
FIG. 3f is a schematic structural view showing rotation of a flipping claw assembly of the load-bearing member in the same-storey framework mutual-climbing-type automatic raising/lowering support system;
FIG. 4a is a schematic structural view of a climbing frame in the same-storey framework mutual-climbing-type automatic raising/lowering support system;
FIG. 4b is a schematic structural view of a second flipping claw assembly of the climbing frame in the same-storey framework mutual-climbing-type automatic raising/lowering support system;
FIG. 4c is a schematic structural view of a second rotating pivot shaft of the climbing frame in the same-storey framework mutual-climbing-type automatic raising/lowering support system;
FIG. 4d is a schematic structural view showing rotation of the second flipping claw assembly in the same-storey framework mutual-climbing-type automatic raising/lowering support system;
FIG. 4e is a schematic structural view of a mounting slot on a bottom of the climbing frame in the same-storey framework mutual-climbing-type automatic raising/lowering support system;
FIG. 5a is a schematic structural view of a support frame in the same-storey framework mutual-climbing-type automatic raising/lowering support system;
FIG. 5b is a schematic structural view of a support frame body in the same-storey framework mutual-climbing-type automatic raising/lowering support system;
FIG. 5c is a schematic structural view of a spring box of the support frame in the same-storey framework mutual-climbing-type automatic raising/lowering support system;
FIG. 5d is a schematic structural view of a guide assembly of the support frame in the same-storey framework mutual-climbing-type automatic raising/lowering support system;
FIG. 6 is a schematic structural view of a telescoping mechanism in the same-storey framework mutual-climbing-type automatic raising/lowering support system according to the present invention;
FIG. 7 is a schematic structural view showing assembly between the load-bearing members in the same-storey framework mutual-climbing-type automatic raising/lowering support system;
FIG. 8a is a schematic structural view showing assembly between the climbing frame and the load-bearing member in a same-storey framework mutual-climbing-type automatic raising/lowering support system;
FIG. 8b is a schematic structural view showing assembly between the climbing frame and the load-bearing member in the same-storey framework mutual-climbing-type automatic raising/lowering support system;
FIG. 9 is a schematic structural view showing assembly between the support frame and the load-bearing member in the same-storey framework mutual-climbing-type automatic raising/lowering support system;
FIG. 10 is a schematic structural view of a guiding sliding pair between the support frame and the climbing frame in a same-storey framework mutual-climbing-type automatic raising/lowering support system;
FIG. 11a is a schematic front structural view showing automatic alignment between a first flipping claw and an inner claw shoe in the same-storey framework mutual-climbing-type automatic raising/lowering support system;
FIG. 11b is a schematic side structural view showing automatic alignment between the first flipping claw and the inner claw shoe in the same-storey framework mutual-climbing-type automatic raising/lowering support system;
FIG. 12a is a schematic structural view showing assembly between the telescoping mechanism, the climbing frame, and the support frame in the same-storey framework mutual-climbing-type automatic raising/lowering support system (during a raising process);
FIG. 12b is a schematic structural view showing assembly between the telescoping mechanism, the climbing frame, and the support frame in the same-storey framework mutual-climbing-type automatic raising/lowering support system (upon completion of the raising process);
FIG. 13 is a schematic structural view showing assembly between the telescoping mechanism and a support column in the same-storey framework mutual-climbing-type automatic raising/lowering support system;
FIG. 14a is a schematic front structural view of a main structure of the same-storey framework mutual-climbing-type automatic raising/lowering support system;
FIG. 14b is a schematic side structural view of the main structure of the same-storey framework mutual-climbing-type automatic raising/lowering support system;
FIG. 15a is a schematic structural view showing an initial state of a raising process of the same-storey framework mutual-climbing-type automatic raising/lowering support system;
FIG. 15b is a schematic structural view showing an intermediate state of the raising process of the same-storey framework mutual-climbing-type automatic raising/lowering support system;
FIG. 15c is a schematic structural view showing a completed state of the raising process of the same-storey framework mutual-climbing-type automatic raising/lowering support system;
FIG. 16a is a schematic structural view showing an initial state of a raising process of the same-storey framework mutual-climbing-type automatic raising/lowering support system;
FIG. 16b is a schematic structural view showing an intermediate state of the raising process of the same-storey framework mutual-climbing-type automatic raising/lowering support system;
FIG. 16c is a schematic structural view showing a completed state of the raising process of the same-storey framework mutual-climbing-type automatic raising/lowering support system;
FIG. 17a is a schematic structural view showing an initial state of a lowering process of the same-storey framework mutual-climbing-type automatic raising/lowering support system;
FIG. 17b is a schematic structural view showing an intermediate state of the lowering process of the climbing frame in the same-storey framework mutual-climbing-type automatic raising/lowering support system;
FIG. 17c is a schematic structural view showing a completed state of the lowering process of the climbing frame in the same-storey framework mutual-climbing-type automatic raising/lowering support system; and
FIG. 17d is a schematic structural view showing a completed state of the lowering process of the support frame in the same-storey framework mutual-climbing-type automatic raising/lowering support system.

Reference signs used in the figures: 1 - steel construction platform; 2 - reusable concrete structure-embedded member; 3 - load-bearing member; 3.1 - load-bearing member body; 3.1.1 - first top block; 3.1.2 - second top block; 3.2 - bolt; 3.3 - first flipping claw assembly; 3.3.1 - first flipping claw; 3.3.2 - first elastic material layer; 3.3.3 - screw; 3.4 - outer claw shoe assembly; 3.4.1 - outer claw shoe; 3.4.2 - horizontal stiffener plate; 3.4.3 - vertical stiffener plate; 3.5 - first rotating pivot shaft assembly; 3.5.1 - first pivot shaft; 3.5.2 - first flat key; 3.5.3 - first hexagonal head; 3.5.4 - first limit baffle; 3.6 - shackle; 3.7 - storey height adjustment block; 4 - climbing frame; 4.1 - climbing frame body; 4.1.1 - guide groove; 4.1.2 - third top block; 4.1.3 - fourth top block; 4.2 - second flipping claw assembly; 4.2.1 - second flipping claw; 4.2.2 - second elastic material layer; 4.3 - second rotating pivot shaft assembly; 4.3.1 - second pivot shaft; 4.3.2 - second flat key; 4.3.3 - second limit baffle; 4.3.4 - second hexagonal head; 4.4 - sliding limit structure; 4.4.1 - mounting slot; 4.4.2 - limit bolt set; 5 - support frame; 5.1 - support frame body; 5.1.1 - inner claw shoe; 5.2 - spring box; 5.2.1 - spring box housing; 5.2.1.1 - seat body; 5.2.1.2 - cover body; 5.2.1.3 - guide shaft; 5.2.1.4 - limit bolt; 5.2.2 - spring; 5.3 - guide assembly; 5.3.1 - guide seat; 5.3.2 - wear-resistant plate; 6 - telescoping mechanism; 6.1 - upper flange; 6.1.1 - upper flange disc; 6.1.2 - upper flange plate; 6.2 - lower flange; 6.2.1 - lower flange disc; 6.2.2 - lower flange plate; 6.3 - spherical hinge structure; 6.3.1 - sphere; 6.3.2 - spherical hinge cover; 6.3.3 - spherical hinge seat; 6.3.4 - waist-shaped limit hole; 7 - support column.

The purpose realisation, functional features, and advantages of the present invention will be further described with reference to embodiments and the accompanying drawings.

### DETAILED DESCRIPTION OF THE EMBODIMENTS

It should be understood that the embodiments described herein are only intended to explain rather than limit the present invention.

It should be noted that the orientations or positional relationships indicated by the terms such as "transverse", "longitudinal", "up", "down", "front", "rear", "left", "right", "vertical", "horizontal", "top", "bottom", "inner", and "outer" are based on those shown in the accompanying drawings, and are intended only for the convenience of describing the present invention and for simplifying the description rather than for indicating or implying that the referred devices or elements must be provided with a particular orientation or constructed and operated in a particular orientation; therefore, these terms should not be construed as limiting the present invention. Furthermore, the terms "first", "second", and the like are intended only for descriptive purposes and should not be construed as indicating or implying relative importance.

The present invention proposes a same-storey framework mutual-climbing-type automatic raising/lowering support system.

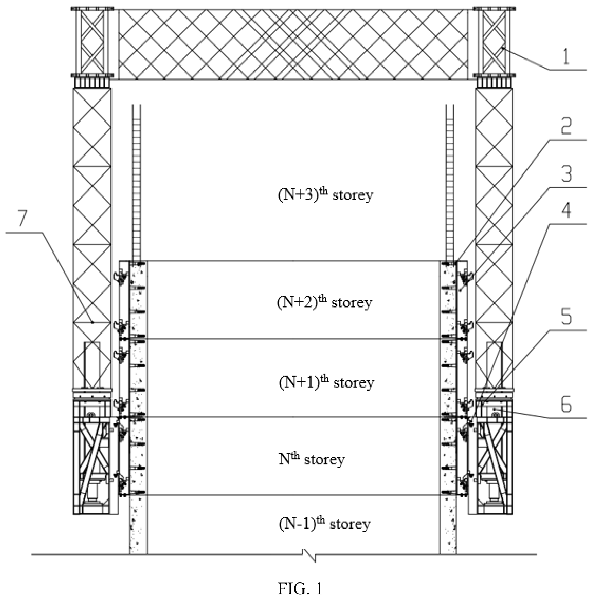

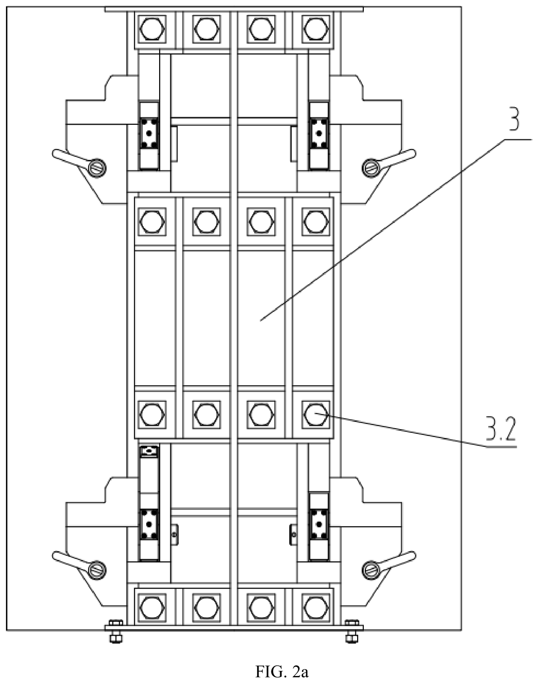

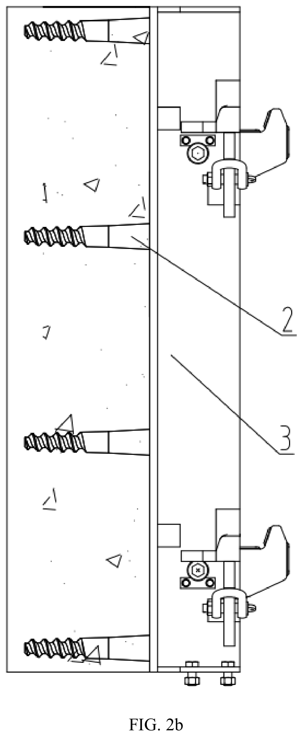

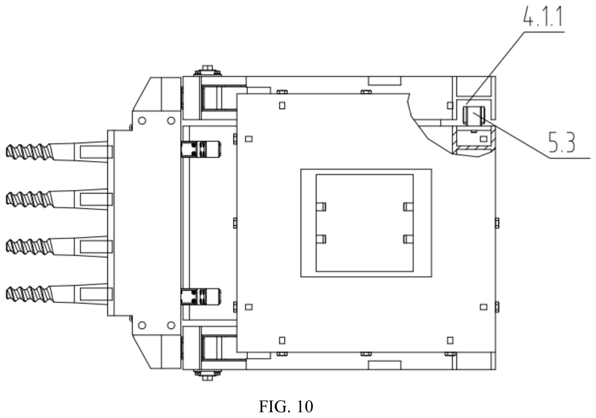

Referring to FIGs. 1 to 17d, in a preferred embodiment, a same-storey framework mutual-climbing-type automatic raising/lowering support system (automatic raising/lowering refers to achieving raising/lowering functionality by a telescoping mechanism) includes a climbing apparatus and a support column 7, where a bottom end of the support column 7 is rigidly connected to an upper flange 6.1 of a cylinder body of the telescoping mechanism 6; and a top end of the support column 7 is rigidly connected to a steel construction platform 1.

The climbing apparatus includes: a load-bearing member 3, a climbing frame 4, a telescoping mechanism 6, and a support frame 5, where the climbing frame 4 and the support frame 5 can be hung on an outer side of the same load-bearing member 3 (i.e., a side facing away from a concrete wall); a guide structure is arranged between the climbing frame 4 and the support frame 5 to achieve mutual-guided climbing; a buffer balancing mechanism is arranged above the support frame 5; and the telescoping mechanism 6 includes the cylinder body and a telescoping rod, where a bottom of the telescoping rod is movably connected to a bottom of the climbing frame 4 via a rotating structure (the rotating structure enables the bottom of the telescoping rod to rotate relative to the bottom of the climbing frame 4); the cylinder body passes through an inner cavity of the support frame 5; the upper flange 6.1 is fixed above the cylinder body to abut against a top end surface of the buffer balancing mechanism; a lower flange 6.2 is fixed below the cylinder body to abut against a bottom end surface of the support frame 5; and the cylinder body and the support frame 5 can move horizontally. The lower flange 6.2 is located between the upper flange 6.1 and the rotating structure.

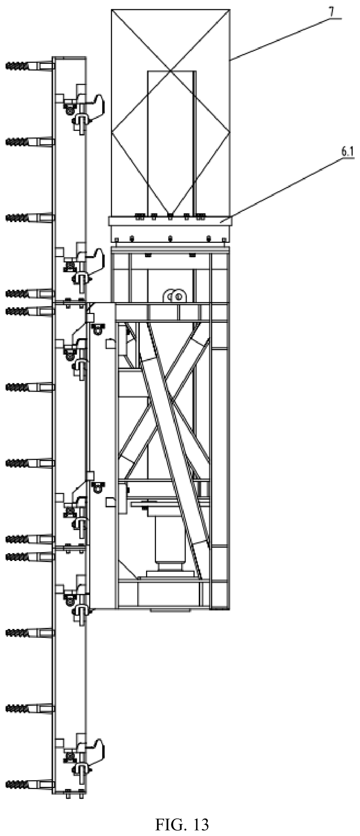

The support column 7 may be formed by welding profiles. The support column 7 has an upper end rigidly connected to the steel construction platform 1 and a lower end rigidly connected to the upper flange 6.1 of the cylinder body to support climbing of the steel construction platform 1 (as shown in FIG. 13). The telescoping mechanism 6 may take various forms of linear motion mechanisms, such as hydraulic cylinders, linear guide rods, screw jacks, and electric cylinders, which are not limited in the present invention.

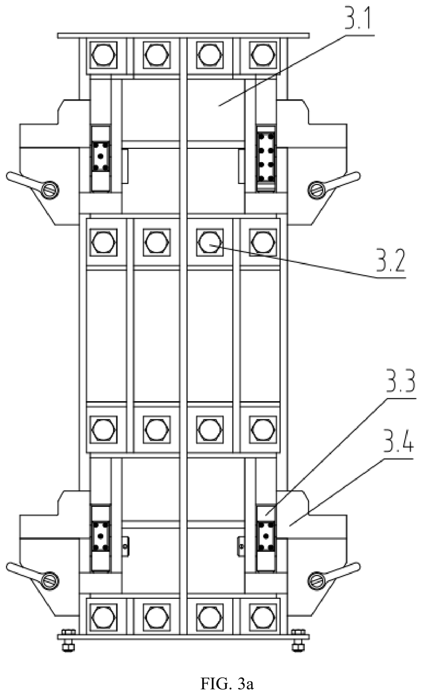

Referring to FIGs. 3a to 3f, this embodiment proposes a specific structure of the load-bearing member 3. The load-bearing member 3 includes a load-bearing member body 3.1, fasteners (which may be bolts 3.2) for securing the load-bearing member body 3.1 to a concrete wall, as well as a first flipping claw assembly 3.3 and an outer claw shoe assembly 3.4 mounted on the load-bearing member body 3.1, where at least two rows of through-holes are arranged along the height direction of the load-bearing member body 3.1 for the fasteners to pass through, and the height of the load-bearing member body 3.1 corresponds to one storey height of the concrete wall (i.e., the height of the load-bearing member body 3.1 is equal to that of one storey of the building). The load-bearing member body 3.1 may be formed by welding metal materials such as Q35B and 42CrMo to enhance the overall structural strength.

Referring to FIG. 3a, the load-bearing member body 3.1 is illustrated as having four rows of through-holes as an example, with each row containing four through-holes, totaling sixteen through-holes for installing the fasteners, thereby facilitating avoidance of pre-drilled hole positions on the concrete wall.

Additionally, reusable concrete structure-embedded members 2 can be flexibly configured according to construction load and concrete structure requirements, such as embedding a plurality of layers with each layer consisting of a plurality of members. The load-bearing member 3 is rigidly connected to the reusable concrete structure-embedded members 2 through fasteners (bolts 3.2), thereby enhancing both the load-bearing capacity of the load-bearing member 3 and the embedding accuracy.

In this embodiment, the load-bearing member body 3.1 is illustrated as being provided with two layers of outer claw shoe assemblies 3.4 as an example. In this configuration, positioning can be achieved in two modes: raising by 1/2 storey height or by one full storey height each time, thereby achieving raising in half-storey-height increments. When the load-bearing member body 3.1 is provided with three layers of outer claw shoe assemblies 3.4, positioning can be achieved in three modes: raising by 1/3 storey height, 2/3 storey height, or one full storey height each time, thereby achieving raising in 1/3-, 2/3-, or full-storey-height increments.

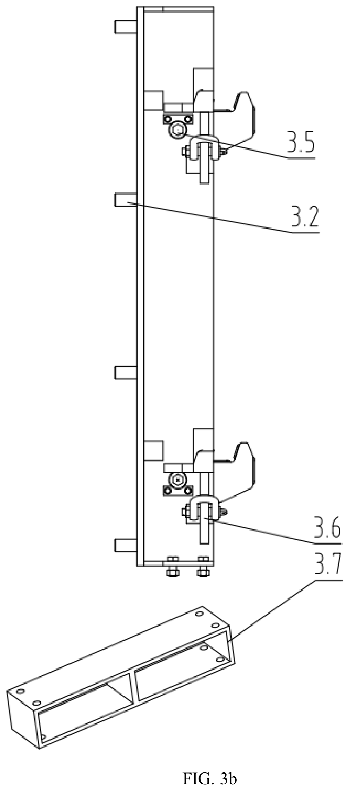

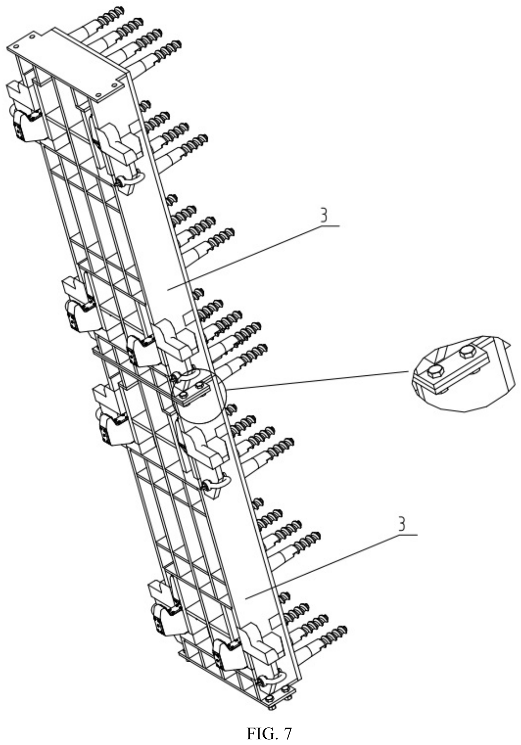

Further, referring to FIG. 3b, the load-bearing member 3 further includes a storey height adjustment block 3.7 detachably connected to the load-bearing member body 3.1. The storey height adjustment block 3.7 is connected to either the top end surface or the bottom end surface of the load-bearing member body 3.1. Connecting plates may be arranged on both the upper and lower portions of the load-bearing member body 3.1. The connecting plates are machined with smooth holes to facilitate bolted connections with vertically adjacent load-bearing members 3 or storey height adjustment blocks 3.7 (refer to FIG. 7).

The load-bearing member 3 first serves as formwork for casting construction of the main concrete structure and then, after the main concrete structure achieves required strength, is used for subsequent installation of the climbing frame 4 and the support frame 5. When changes in the constructed storey height of the main structure occur, the storey height adjustment blocks 3.7 may be added between upper and lower load-bearing members 3.

In this embodiment, since the height of the load-bearing member body 3.1 corresponds to one storey height of the concrete wall, and at least two rows of through-holes are arranged along the height direction of the load-bearing member body 3.1 for fasteners to pass through, the automatic raising/lowering support system can be more easily attached to the side surface of the concrete wall compared to conventional solutions in the prior art where small-sized load-bearing member bodies are used (in the prior art, the height of the load-bearing member is much smaller than that of the wall.). Additionally, as the height of the load-bearing member body 3.1 corresponds to one storey height of the concrete wall, its load-bearing area is greatly increased compared to small-sized wall-attached supports in the prior art. Consequently, the overall structural strength of the load-bearing member 3 is enhanced.

Further, at least two rows of outer claw shoe assemblies 3.4 are arranged along the height direction of the load-bearing member body 3.1, with the outer claw shoe assemblies 3.4 disposed on both left and right sides of the load-bearing member body 3.1. The outer claw shoe assemblies 3.4 support below a second flipping claw assembly 4.2 of the climbing frame 4 to bear its load. In other words, each load-bearing member body 3.1 is provided with at least four outer claw shoe assemblies 3.4, with two rows disposed on each of the left and right outer side walls of the load-bearing member body 3.1, thereby facilitating same-storey climbing of the automatic raising/lowering support system.

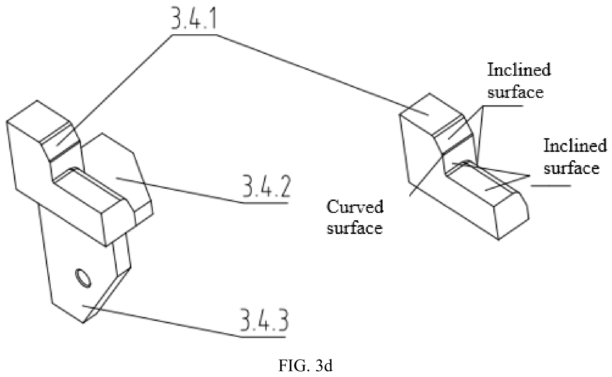

Specifically, referring to FIG. 3d, the outer claw shoe assembly 3.4 includes an outer claw shoe 3.4.1 configured to contact the second flipping claw assembly 4.2, a vertical stiffener plate 3.4.3 disposed below the outer claw shoe 3.4.1 to support it, and a horizontal stiffener plate 3.4.2 connected to a side of the outer claw shoe 3.4.1 facing the concrete wall, where the outer claw shoe 3.4.1 may be welded to the load-bearing member body 3.1; the vertical stiffener plate 3.4.3 supports the underside of the outer claw shoe 3.4.1 to enhance its load-bearing capacity; both the vertical stiffener plate 3.4.3 and the horizontal stiffener plate 3.4.2 may be welded to the load-bearing member body 3.1, with the welded connections offering the advantage of simple installation; and the outer claw shoe 3.4.1 may employ quenched and tempered 42CrMo materials with full penetration welding to improve local load-bearing capacity.

Referring to FIG. 3d, the outer claw shoe 3.4.1 has an outwardly extending support arm including: a first inclined surface, a second inclined surface, and a transitional curved surface between the first and second inclined surfaces, where the first inclined surface forms a top end surface of the support arm; the second inclined surface is disposed on an end surface of the support arm facing the concrete wall; and the horizontal stiffener plate 3.4.2 is connected to the second inclined surface. A side surface of the support arm facing the second flipping claw 4.2.1 is a flat surface to fit therewith. An inclined guide surface is arranged on a side of the outer claw shoe 3.4.1 facing the support arm to guide and limit the first flipping claw 3.3.1.

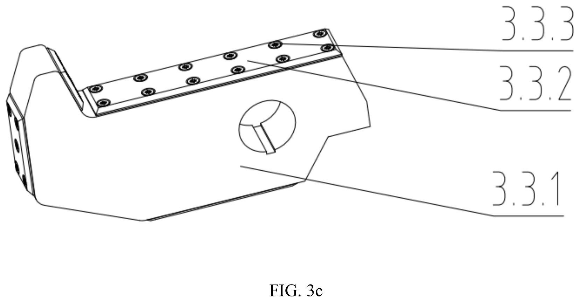

Referring to FIG. 3c, the first flipping claw assembly 3.3 is configured to cooperate with an inner claw shoe 5.1.1 of the support frame 5 in the automatic raising/lowering support system for top formwork. The first flipping claw assembly 3.3 includes a first flipping claw 3.3.1 rotatable relative to the load-bearing member body 3.1 and a first rotating pivot shaft assembly 3.5 penetrating through both the first flipping claw 3.3.1 and the load-bearing member body 3.1. The second flipping claw 4.2.1 can extend into a slot of the inner claw shoe 5.1.1 to support the support frame 5.

By arranging the first flipping claw assembly 3.3, the load-bearing member body 3.1 achieves the function of supporting climbing of the support frame 5. The first flipping claw assembly 3.3 is mounted on the load-bearing member body 3.1 via the first rotating pivot shaft assembly 3.5. The first rotating pivot shaft assembly 3.5 includes a first pivot shaft 3.5.1, a first flat key 3.5.2, a first hexagonal head 3.5.3, and a first limit baffle 3.5.4, enabling the rotational function of the first flipping claw 3.3.1 relative to the load-bearing member body 3.1. Rotation of the first hexagonal head 3.5.3 can drive the first pivot shaft 3.5.1 to rotate.

Further, the load-bearing member body 3.1 is internally provided with a recess that can fully accommodate the second flipping claw 4.2.1. Under the action of gravity, the second flipping claw 4.2.1 automatically extends outward from the recess. During the climbing process of the climbing frame 4, the second flipping claw 4.2.1 is automatically retracted into the recess under the action of the climbing frame 4's outer frame. When the climbing frame 4 climbs in place, the second flipping claw 4.2.1 automatically extends outward from the recess again under the action of gravity.

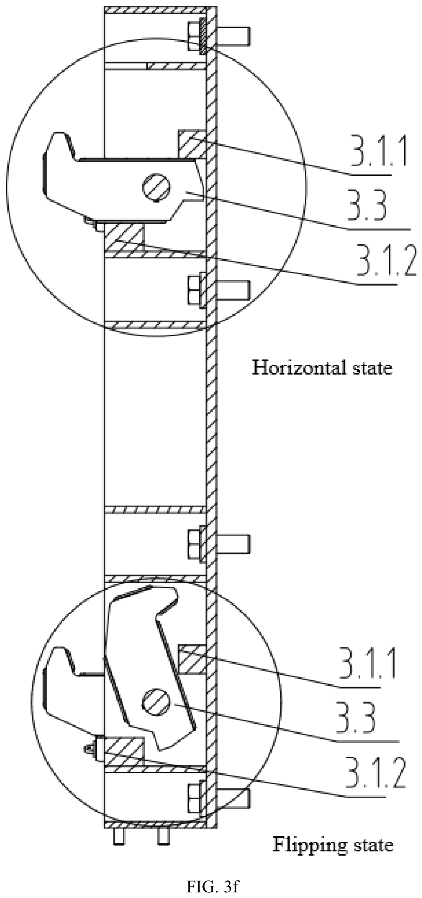

Further, referring to FIG. 3f, a first stop block 3.1.1 and a second stop block 3.1.2 are fixed in the recess of the load-bearing member body 3.1 to limit a rotation angle of the first flipping claw 3.3.1, thereby maintaining the first flipping claw 3.3.1 in a horizontal state when no external force is applied. The first stop block 3.1.1 and second stop block 3.1.2 may employ quenched and tempered 42CrMo materials with full penetration welding to enhance local load-bearing capacity.

Additionally, the load-bearing member body 3.1 is provided with a shackle 3.6 that cooperates with a hoisting mechanism to enable hoisting of the load-bearing member body 3.1.

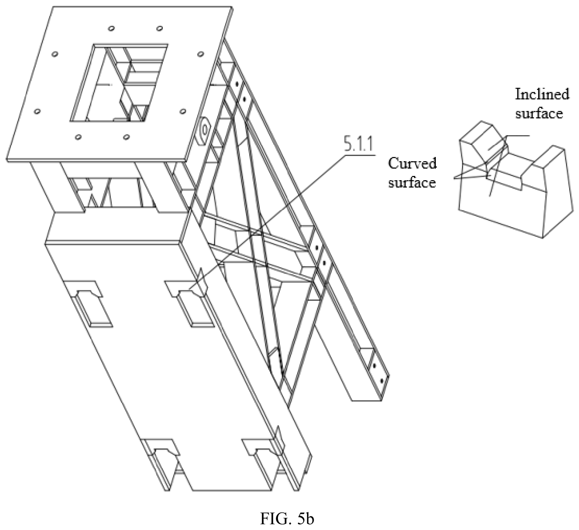

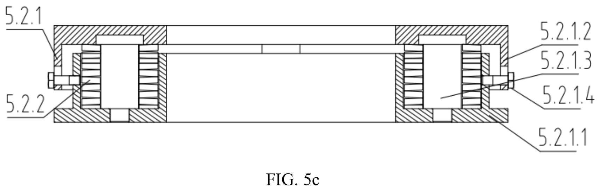

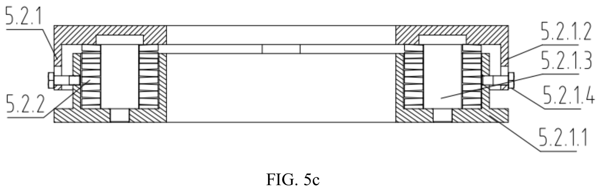

Specifically, referring to FIG. 5c, the buffer balancing mechanism is a spring box 5.2, which is detachably mounted (e.g., via screw fastening) on the top of the support frame 5. The spring box 5.2 includes a spring box housing 5.2.1 and a plurality of sets of springs 5.2.2, where the spring box housing 5.2.1 includes a hollow seat body 5.2.1.1 and a cover body 5.2.1.2 covering the seat body 5.2.1.1, and a relative distance between the seat body 5.2.1.1 and cover body 5.2.1.2 is adjusted via the springs 5.2.2.

Further, referring to FIG. 5c, the spring box 5.2 further includes a guide shaft 5.2.1.3 fixed on the seat body 5.2.1.1 and a limit bolt 5.2.1.4 passing through side surfaces of both the seat body 5.2.1.1 and the cover body 5.2.1.2, where the spring 5.2.2 is sleeved outside the guide shaft 5.2.1.3; a limit hole is formed in the side surface of the cover body 5.2.1.2 for the limit bolt 5.2.1.4 to pass through, such that the limit bolt 5.2.1.4 restricts a maximum displacement of the cover body 5.2.1.2 when the cover body 5.2.1.2 moves relative to the seat body 5.2.1.1; and the seat body 5.2.1.1 and the cover body 5.2.1.2 are hollow to allow the telescoping mechanism 6 to pass through.

The provision of the guide shaft 5.2.1.3 prevents radial deformation of the springs 5.2.2. Additionally, the cooperation between the limit bolt 5.2.1.4 and the limit hole restricts relative movement between the cover body 5.2.1.2 and the seat body 5.2.1.1, thereby maintaining the springs in compression to achieve buffering functionality.

The seat body 5.2.1.1 are provided with threaded holes in both its sides and bottom, where the bottom threaded holes are configured to accommodate the guide shaft 5.2.1.3, and the side threaded holes are configured for the limit bolt 5.2.1.4 to pass through.

The spring box 5.2 is installed as follows: first, the guide shaft 5.2.1.3 is fixed inside the seat body 5.2.1.1's hollow chamber; then, the plurality of sets of springs 5.2.2 are assembled onto the guide shaft 5.2.1.3; finally, the cover body 5.2.1.2 is integrated with the seat body 5.2.1.1 using the side-mounted limit bolt 5.2.1.4. It should be noted that the springs 5.2.2 in the spring box 5.2 must remain pre-compressed throughout the installation process.

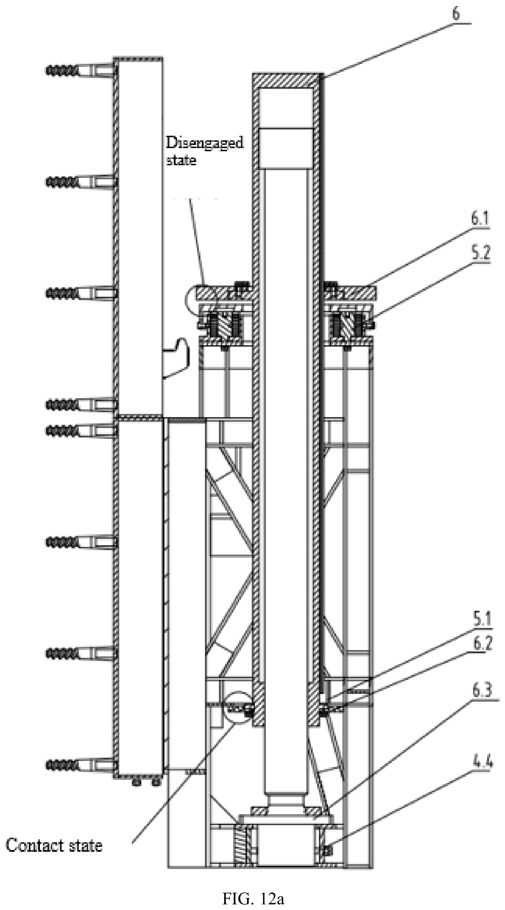

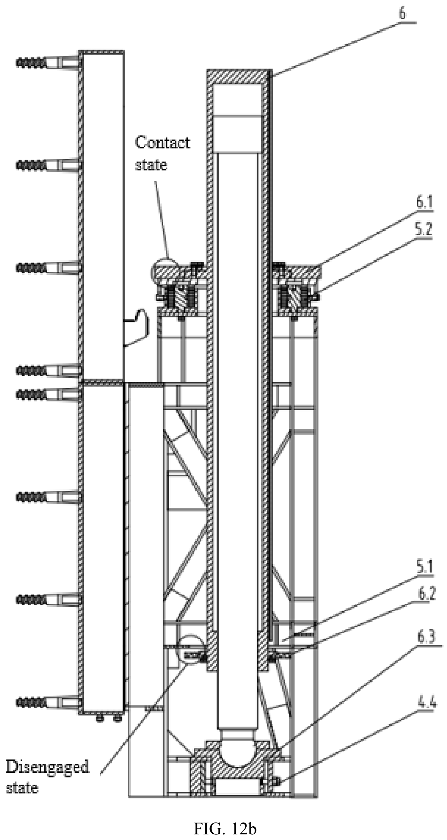

Referring to FIGs. 12a and 12b, the plurality of sets of springs 5.2.2 in the spring box 5.2 can maintain different compressed states to balance and mitigate partial loads, displacement deviations, and vibrations of the steel construction platform 1.

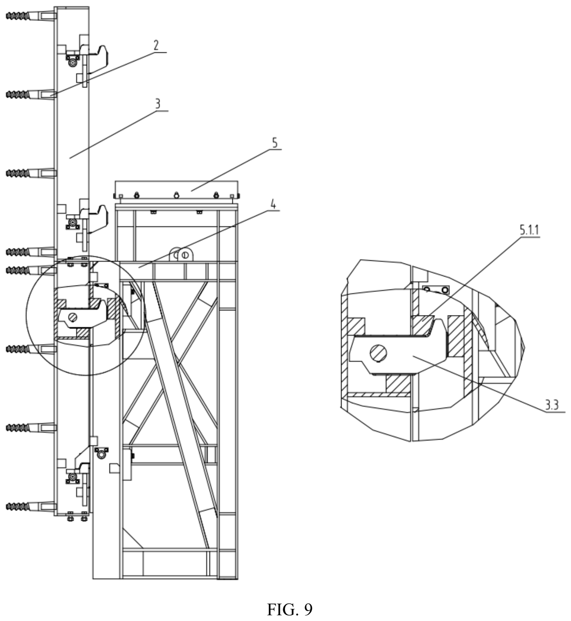

Further, referring to FIG. 9, the support frame 5 can be accommodated within the recess formed by the climbing frame 4. At least two rows of outer claw shoe assemblies 3.4 and at least two rows of first flipping claw assemblies 3.3 are arranged along the height direction of the load-bearing member 3 (with at least two rows of outer claw shoes 3.4.1 arranged to stably support the climbing frame 4, and at least two rows of first flipping claw assemblies 3.3 arranged to stably support the support frame 5, thereby enabling the climbing frame 4 and the support frame 5 to be hung on the same load-bearing member 3). The climbing frame 4 is provided with the second flipping claw assembly 4.2, while the support frame 5 is provided with the inner claw shoe 5.1.1. The flipping claw of the second flipping claw assembly 4.2 is shape-matched with the support arm of the outer claw shoe assembly 3.4, and the slot of the inner claw shoe 5.1.1 is shape-matched with the flipping claw of the first flipping claw assembly 3.3.

In the prior art, the support frame 5 is hung on the load-bearing member 3 on an upper storey above the climbing frame 4, meaning that the support frame 5 and the climbing frame 4 are located on different storeys. Consequently, the support frame 5 and the climbing frame 4 together need to occupy at least two storey heights (therefore, in the prior art, multi-storey main concrete structures are typically employed to install existing automatic raising/lowering support systems, meaning that the automatic raising/lowering support systems can only be installed after at least two storeys of the main concrete structures have been constructed, with the systems occupying multiple storeys, which impedes subsequent construction work such as construction of secondary structures and plastering of exterior walls). In this embodiment, the support frame 5 is accommodated in the recess formed by the climbing frame 4, enabling both the support frame 5 and the climbing frame 4 to be simultaneously hung on the side surface of the load-bearing member 3 on the same storey. As a result, the support frame 5 and climbing frame 4 collectively occupy only one-storey space, and the automatic raising/lowering support system can be installed after completing just one storey of the main concrete structure, thereby allowing earlier involvement of the steel construction platform 1 in construction of the main concrete structure. Additionally, the automatic raising/lowering support system occupies only one storey, facilitating subsequent construction work such as construction of secondary structures and plastering of exterior walls. That is to say, the same-storey framework mutual-climbing-type automatic raising/lowering support system achieves same-storey climbing (where both the support frame 5 and the climbing frame 4 can be simultaneously hung on the load-bearing member 3 on the same storey).

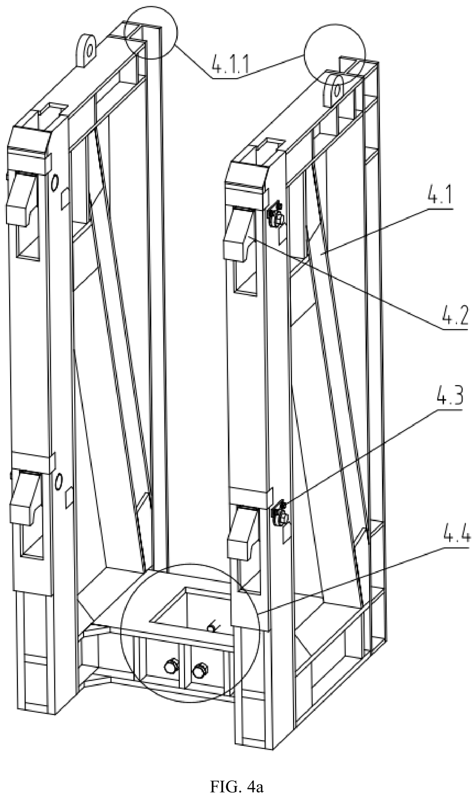

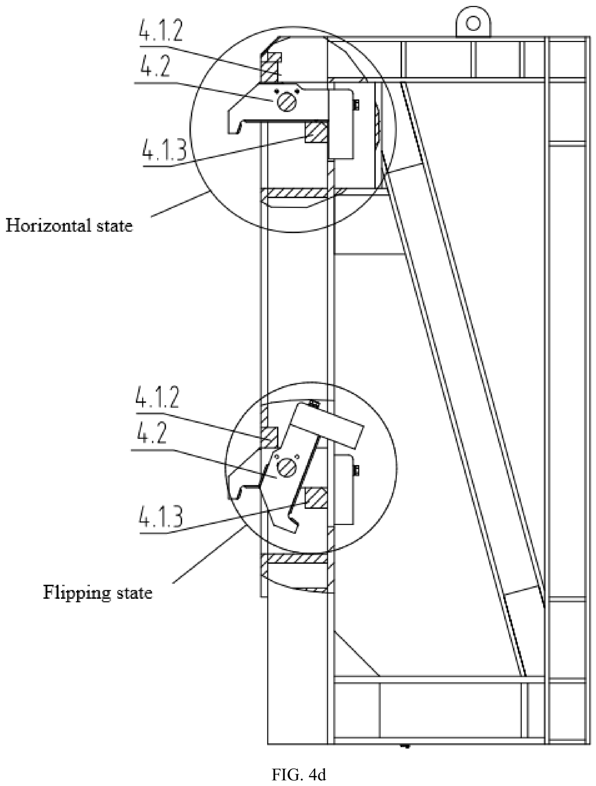

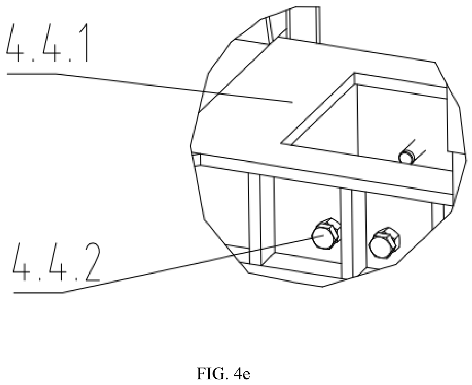

Specifically, referring to FIGs. 4a to 4e, the climbing frame 4 includes a climbing frame body 4.1, a second flipping claw assembly 4.2, a second rotating pivot shaft assembly 4.3, and a sliding limit structure 4.4, where the climbing frame body 4.1 is formed by welding Q355B and 42CrMo metal materials and is provided with a third stop block 4.1.2, a fourth stop block 4.1.3, and a guide groove 4.1.1. The third stop block 4.1.2 and the fourth stop block 4.1.3 cooperate to limit the flipping position of the flapping claw in the second flipping claw assembly 4.2. The third stop block 4.1.2 and the fourth stop block 4.1.3 may employ quenched and tempered 42CrMo materials with full penetration welding to enhance local load-bearing capacity. The climbing frame 4 is provided with two layers of second flipping claw assemblies 4.2. Each second flipping claw assembly 4.2 includes a second flipping claw 4.2.1, a second elastic material layer 4.2.2, and screws. The second rotating pivot shaft assembly 4.3 includes a second pivot shaft 4.3.1, a second flat key 4.3.2, a second limit baffle 4.3.3, and a second hexagonal head 4.3.4, where the second pivot shaft 4.3.1 is connected to the second flipping claw 4.2.1 via key coupling. The second flipping claw 4.2.1 can flip under the action of gravity while maintaining a horizontal state through cooperation with the third stop block 4.1.2 and the fourth stop block 4.1.3.

In this embodiment, the rotating structure is a spherical hinge structure 6.3, and the climbing frame 4 and the support frame 5 can be hung on the outer side of the same load-bearing member 3, specifically achieved through the following configuration: the climbing frame 4 includes two side plates and a base connecting the two side plates; the support frame 5 is located within a concave space formed by the two side plates and the base, and is hung on the outer side of the load-bearing member 3; and a mounting slot 4.4.1 is formed on the base, with the spherical hinge structure 6.3 adjustably positioned within the mounting slot 4.4.1.

The mounting slot 4.4.1 and its internal limit bolt set 4.4.2 together constitute the sliding limit structure 4.4, which adjusts and fixes the installation position of the spherical hinge structure 6.3. The dimensions of the spherical hinge seat 6.3.3 and the lower flange plate 6.2.2 exceed those of the rectangular cavities in both the spring box 5.2 and the support frame 5. During installation, the spherical hinge seat 6.3.3 is assembled in the concave space at the bottom of the climbing frame 4, limiting the position of the spherical hinge structure 6.3 through cooperation between the limit bolt set 4.4.2 and the waist-shaped limit holes 6.3.4 in the side surface of the spherical hinge seat 6.3.3. When the telescoping mechanism 6 is extended, it raises the spherical hinge structure 6.3, thereby driving the climbing frame 4 to ascend.

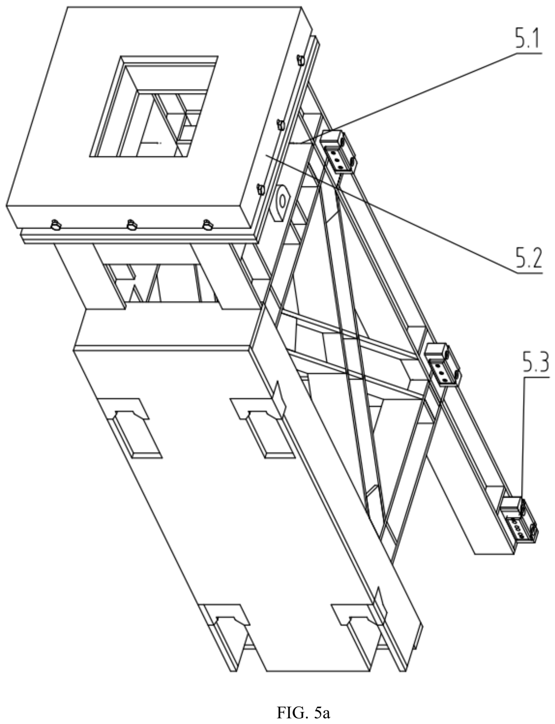

Further, referring to FIGs. 5a to 5d, the support frame 5 includes a support frame body 5.1, a spring box 5.2, and a guide assembly 5.3, where the support frame body 5.1 can accommodate two layers of inner claw shoes 5.1.1. The inner claw shoes 5.1.1 have structural characteristics including inclined surfaces, curved surfaces, and flat surfaces. These inner claw shoes 5.1.1 may employ quenched and tempered 42CrMo materials with full penetration welding to enhance local load-bearing capacity. The spring box 5.2 is assembled onto the upper portion of the support frame body 5.1 via screw connections.

Referring to FIGs. 4a and 5d, the present invention proposes a guide structure, including a guide assembly 5.3 disposed on a side surface of the support frame 5 and guide grooves 4.1.1 disposed on mutually facing sides of the two side plates of the climbing frame 4, where the guide assembly 5.3 is accommodated within the guide grooves 4.1.1 to guide raising/lowering of the support frame 5.

By arranging the guide assembly 5.3 and the guide grooves 4.1.1 of the climbing frame 4 to form a guide sliding pair, mutual guiding between the support frame 5 and the climbing frame 4 during movement is ensured, thereby guiding the mutual climbing of the frames (where "mutual climbing of the frames" refers to the climbing frame 4 and the support frame 5 using each other as supports to achieve relative climbing).

Referring to FIG. 5d, this embodiment proposes a specific structure of the guide assembly 5.3, where the guide assembly 5.3 includes a guide seat 5.3.1 fixed to the side surface of the support frame 5 and a wear-resistant plate 5.3.2 detachably mounted on the outer side surface of the guide seat 5.3.1. The wear-resistant plate 5.3.2 is made of ZCuSn 10P1 material. The guide assembly 5.3 is connected to the support frame body 5.1 via screws. The provision of the wear-resistant plate 5.3.2 enhances the wear resistance of the guide assembly 5.3. The thickness of the wear-resistant plate 5.3.2 of the guide assembly 5.3 is adjustable, thereby allowing adjustment of the spacing of the guide sliding pair between the support frame 5 and the climbing frame 4. This adjustable spacing ensures smooth movement between the support frame and the climbing frame.

Further, both the second flipping claw assembly 4.2 and the first flipping claw assembly 3.3 are correspondingly provided with locking mechanisms to lock their rotation. The provision of these locking mechanisms enables lowering functionality of the same-storey framework mutual-climbing-type automatic raising/lowering support system.

In the prior art, the steel construction platform 1 must be disassembled at high altitudes after completing the construction of the main concrete structure. Working at high altitudes not only presents safety risks but also demonstrates low work efficiency (existing automatic raising/lowering support systems only possess raising functionality). To enable ground-level disassembly of the steel construction platform 1 and expand construction work types after completing the construction of the main concrete structure, the support system requires lowering functionality. However, conventional automatic raising/lowering support systems for top formwork lack the lowering functionality. The present application incorporates the locking mechanisms to restrict rotation of the flipping claws, enabling descending movement of the climbing frame 4 relative to the load-bearing member 3, ground-level disassembly of the steel construction platform 1, and provision of working surfaces by the lowered steel construction platform 1 for subsequent construction work such as construction of secondary structures and plastering of exterior walls.

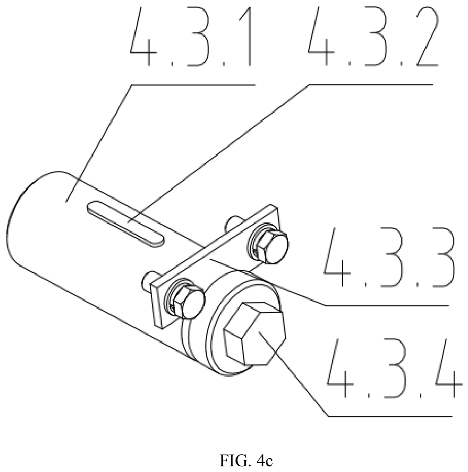

Specifically, referring to FIG. 4c, this embodiment proposes a specific structure of the locking mechanism: the locking mechanism includes limit baffles (the second limit baffle 4.3.3 corresponds to the second flipping claw 4.2.1, while the first limit baffle 3.5.4 corresponds to the first flipping claw 3.3.1). Each flipping claw is rotationally mounted via a pivot shaft, with the head of the pivot shaft having a limit groove. The limit baffle is inserted in the limit groove to restrict rotation of the pivot shaft. Both the second flipping claw assembly 4.2 and the first flipping claw assembly 3.3 achieve rotation through pivot shaft installations.

Specifically, the limit baffle is detachably mounted on the load-bearing member 3 and the climbing frame 4. For example, two sets of bolt holes may be formed in the load-bearing member 3 and the climbing frame 4. When bolts passing through the limit baffle are installed in a first set of bolt holes, the limit baffle is inserted in an annular positioning groove disposed at an end of the pivot shaft, thereby restricting axial movement of the pivot shaft and preventing loosening of the pivot shaft. When the bolts passing through the limit baffle are installed in a second set of bolt holes, the limit baffle is inserted in a specially-shaped limit groove inside the annular positioning groove, thereby preventing the pivot shaft from rotation and locking the flipping claw. This limit baffle design offers a simple and easy-to-manufacture structure and low production costs. Alternatively, the limit baffle may achieve different installation positions for the two states through sliding movement.

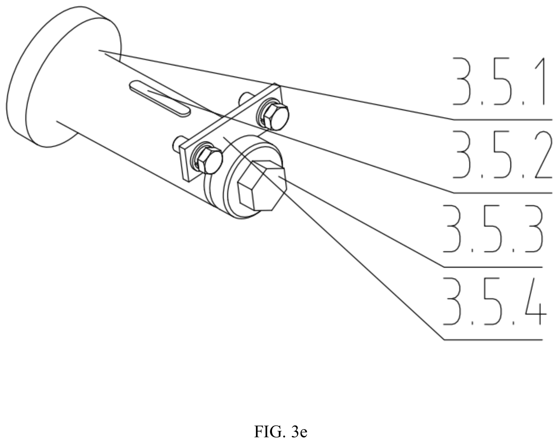

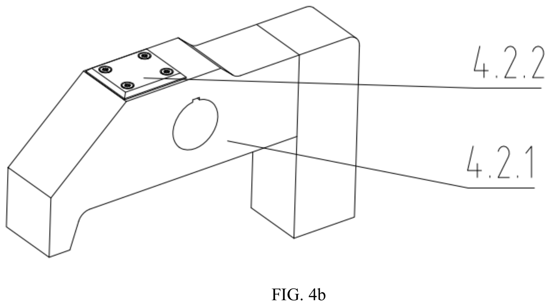

Further, referring to FIGs. 3c, 3e, 4b, and 4c, the outer side wall of the pivot shaft is provided with a limit protrusion, and the inner wall of the flipping claw's through-hole for the pivot shaft to pass through is provided with a positioning groove, where the limit protrusion is accommodated within the positioning groove to fixedly connect the flipping claw and the pivot shaft. The cooperation between the limit protrusion and the positioning groove restricts circumferential rotation of the pivot shaft while providing an extremely simple installation method for the flipping claw and the pivot shaft.

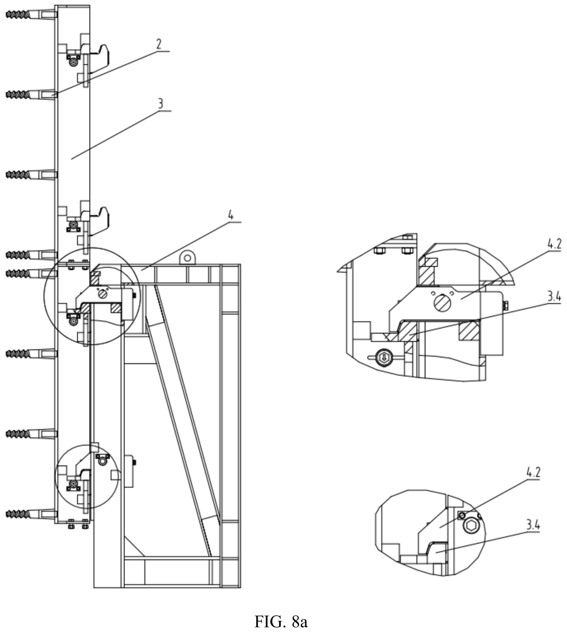

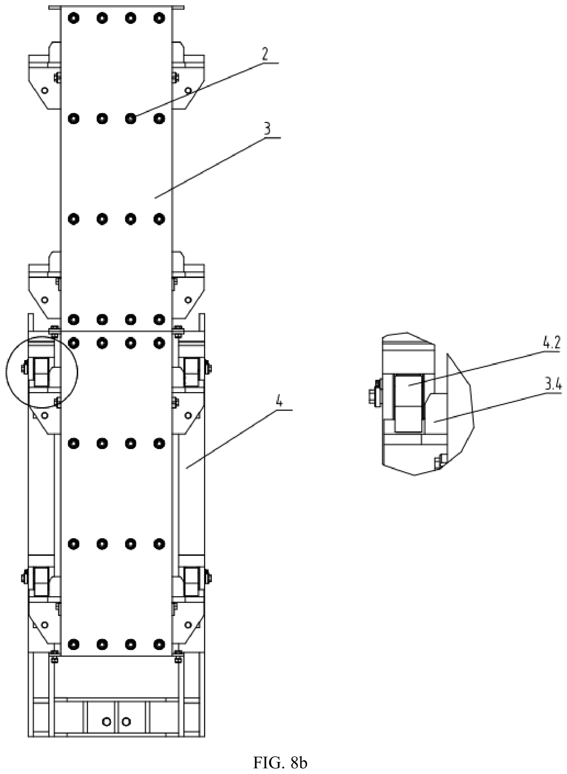

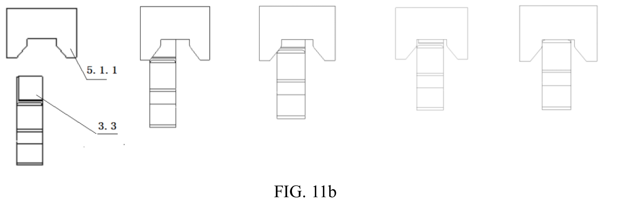

Further, referring to FIG. 11b, the width of the flipping claw of the first flipping claw assembly 3.3 is smaller than the width of the slot of the inner claw shoe 5.1.1. Referring to FIG. 8b, the width of the flipping claw of the second flipping claw assembly 4.2 is smaller than the width of the support arm of the outer claw shoe assembly 3.4.

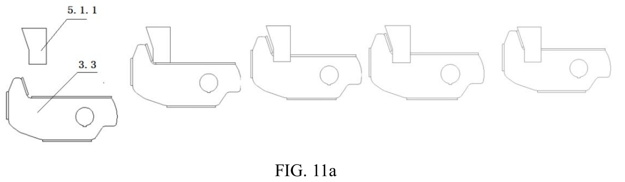

The support arm of the outer claw shoe assembly 3.4, the inner claw shoe 5.1.1, and the flipping claw all have both flat and inclined surface structures. Referring to FIGs. 11a and 11b, when there is a certain deviation in the spatial distance between the load-bearing member 3 and the support frame 5, the support frame 5 utilises the action of gravity and the self-aligning inclined surface structures therebetween to eliminate positional deviations during positioning, thereby enabling automatic alignment between the load-bearing member 3 and the support frame 5 into planar contact. The same principle applies between the outer claw shoe 3.4.1 of the load-bearing member 3 and the flipping claw of the climbing frame 4, enabling automatic alignment into planar contact during positioning while eliminating positional deviations. Specifically, the contact surfaces between the second flipping claw 4.2.1 and the outer claw shoe 3.4.1 include a combination of flat surfaces, curved surfaces, and inclined surfaces. This combination provides vertical and horizontal load-bearing capacity, ensures automatic alignment of the climbing frame 4 along the inclined surfaces under the action of gravity until resting on the outer claw shoe 3.4.1 of the load-bearing member 3, and achieves alignment of the automatic raising/lowering support system.

Further, referring to FIGs. 3c and 4b, an elastic material layer is mounted via fasteners on the mating contact surface of the flipping claws (the first flipping claw 3.3.1 corresponds to a first elastic material layer 3.3.2, and the second flipping claw 4.2.1 corresponds to a second elastic material layer 4.2.2). The provision of the elastic material layer ensures tight contact between the flipping claws and either the outer claw shoe 3.4.1 or the inner claw shoe 5.1.1 for joint load-bearing through deformation under external forces.

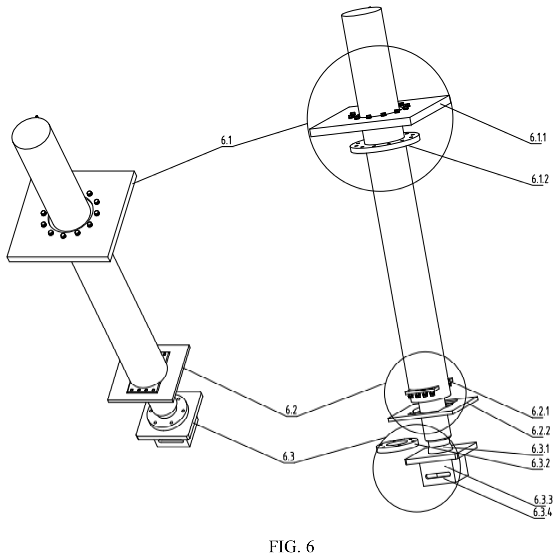

Referring to FIG. 6, the telescoping mechanism 6 is provided with an upper flange 6.1 and a lower flange 6.2, where the upper flange 6.1 is rigidly connected to the support column 7 and includes an upper flange disc 6.1.1 and an upper flange plate 6.1.2 bolted together; and the lower flange 6.2 includes a lower flange disc 6.2.1 and a lower flange plate 6.2.2 bolted together. The bottom of the telescoping mechanism 6 is a spherical hinge structure 6.3, which includes a sphere 6.3.1, a spherical hinge seat 6.3.3, a spherical hinge cover 6.3.2, and a bolt set. The spherical hinge seat 6.3.3 has waist-shaped limit holes 6.3.4 formed in its sides.

Referring to FIG. 7, the load-bearing member 3 first serves as formwork for casting construction of the main concrete structure and then, after the main concrete structure achieves required strength, is used for subsequent installation of the climbing frame 4 and the support frame 5. Two load-bearing members 3 can be bolted together. When changes in the constructed storey height of the main structure occur, the storey height adjustment blocks 3.7 may be added between upper and lower load-bearing members 3.

Referring to FIGs. 12a and 12b, the dimensions of both the spherical hinge seat 6.3.3 and the lower flange plate 6.2.2 exceed those of the rectangular cavities in both the spring box 5.2 and the support frame 5. As shown in FIG. 12a, during the raising process, the upper flange 6.1 is disengaged from the spring box 5.2 (no contact therebetween), and the lower flange 6.2 remains in contact with the bottom end surface of the support frame 5. Thus, the cylinder body can drive the support frame 5 to ascend. As shown in FIG. 12b, when the raising process is completed, the upper flange 6.1 comes to rest on the spring box 5.2, the spring box 5.2 is compressed under external forces, and the lower flange 6.2 becomes disengaged from the bottom end surface of the support frame 5.

The installation process of the same-storey framework mutual-climbing-type automatic raising/lowering support system is as follows.

First, referring to FIGs. 12a and 12b, the spherical hinge seat 6.3.3 is installed into the mounting slot 4.4.1 at the bottom of climbing frame 4, limiting the position through cooperation between the limit bolt set 4.4.2 and the waist-shaped limit holes 6.3.4 in the side surface of the spherical hinge seat 6.3.3; meanwhile, the lower flange plate 6.2.2 is removed. Subsequently, the telescoping mechanism 6 sequentially passes through the rectangular cavities in both the spring box 5.2 and the support frame 5 until the upper flange disc 6.1.1 of the telescoping mechanism 6 rests on the spring box 5.2. Then, the lower flange plate 6.2.2 is reinstalled onto the lower flange disc 6.2.1 while connecting the telescoping mechanism 6 and the climbing frame 4 as an integrated unit via the spherical hinge structure 6.3. The support column 7 is integrated with the upper flange disc 6.1.1 of the telescoping mechanism 6. At this point, the installation of the same-storey framework mutual-climbing-type automatic raising/lowering support system is achieved. Next, the support column 7 and the steel construction platform 1 are installed in sequence.

Referring to FIGs. 12a and 12b, when the upper flange disc 6.1.1 rests on the spring box 5.2, the spring box 5.2 is in a compressed state under external forces. The plurality of sets of springs 5.2.2 in the spring box 5.2 can maintain different compressed states to balance and mitigate partial loads, displacement deviations, and vibrations of the steel construction platform 1. When the upper flange disc 6.1.1 rests on the spring box 5.2, the spherical hinge structure 6.3 at the head of the telescoping mechanism 6 can rotate freely, which ensures multi-surface contact between the first flipping claw 3.3.1 of the load-bearing member 3 and the inner claw shoe 5.1.1 of the support frame 5, thereby achieving load transfer from the steel construction platform 1 to the support frame 5.

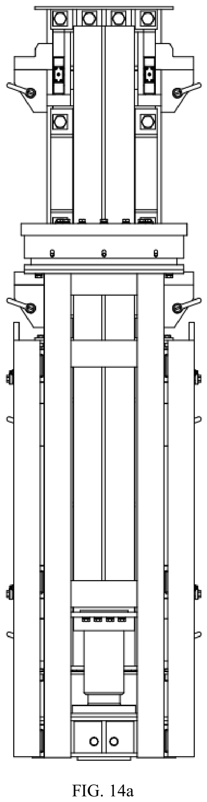

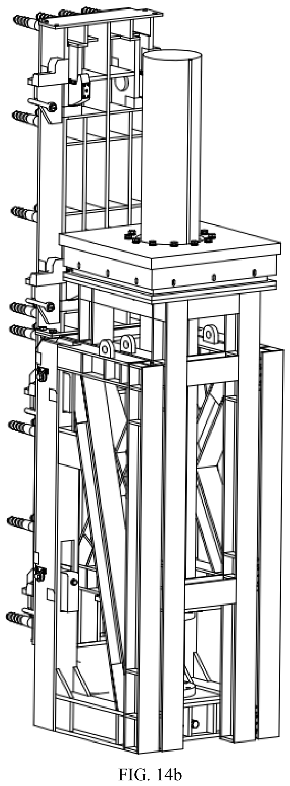

Referring to FIGs. 14a and 14b, the automatic raising/lowering support system has a single layer of load-bearing member 3 during initial installation. The single layer of load-bearing member 3 first serves as formwork for casting construction of the main concrete structure and then, after the main concrete structure achieves required strength, is used for subsequent installation of the automatic raising/lowering support system. First, the reusable concrete structure-embedded member 2 and the load-bearing member 3 are installed, and then the climbing frame 4 is caused to rest on the load-bearing member 3. Subsequently, the support frame 5 is caused to rest on the load-bearing member 3. Next, the telescoping mechanism 6 is installed, with its head movably connected to the climbing frame 4 via the spherical hinge, its lower flange plate 6.2.2 supporting the support frame 5, its upper flange plate 6.1.2 resting on the spring box 5.2 of the support frame 5, and its upper flange 6.1 connected to the support column 7 to support the steel construction platform 1. The automatic raising/lowering support system includes both raising and lowering functionality. During the raising/lowering movement, the automatic raising/lowering support system requires at least two layers of load-bearing members 3.

The raising process of the same-storey framework mutual-climbing-type automatic raising/lowering support system is as follows (including two main steps: raising the support frame 5 and raising the climbing frame 4).

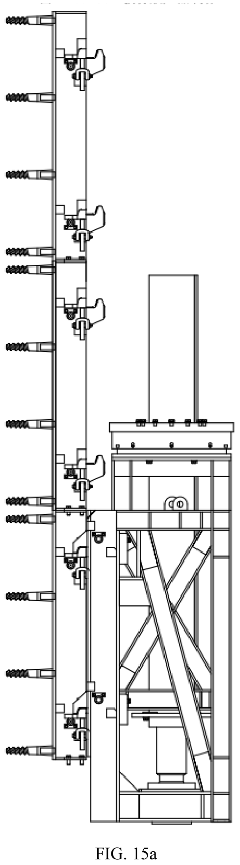

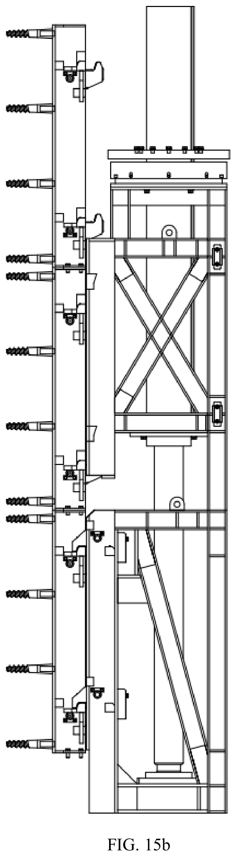

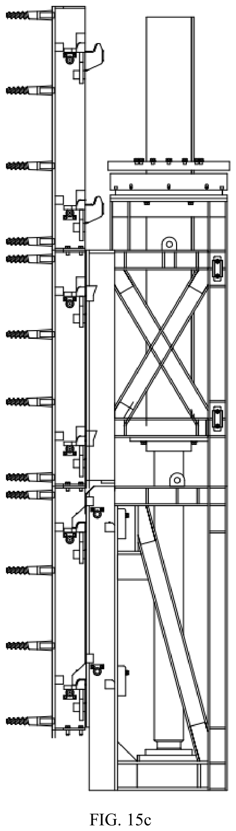

Referring to FIGs. 15a to 15c, when the telescoping mechanism 6 extends (with the cylinder body extending relative to the telescoping rod), its lower flange plate 6.2.2 gradually makes surface contact with the bottom of the support frame 5, and its upper flange disc 6.1.1 is gradually disengaged from the spring box 5.2, thereby enabling the lower flange plate 6.2.2 to support the support frame 5 to ascend continuously and allowing sliding moment between the bottom of the support frame 5 and the lower flange plate 6.2.2 under external forces during the extension movement. Meanwhile, loads from the steel construction platform 1 are transferred through the upper flange disc 6.1.1 to the telescoping mechanism 6. The spherical hinge structure 6.3 at the head of the telescoping mechanism 6 ensures automatic alignment during the extension movement. Once the support frame 5 ascends in place, the telescoping mechanism 6 retracts (i.e., the cylinder body moves slightly downward for a certain distance), enabling multi-surface contact between the inner claw shoe 5.1.1 of the support frame 5 and the first flipping claw 3.3.1 for joint load-bearing, at which point the support frame 5 is hung on the load-bearing member 3. If too large installation deviations or structural construction deviations, or significant deformations due to heavy construction loads during the retraction movement prevent multi-surface contact between the inner claw shoe 5.1.1 of the support frame 5 and the first flipping claw 3.3.1, the support frame 5's position on the lower flange plate 6.2.2 can be adjusted via external forces to achieve multi-surface contact between the inner claw shoe 5.1.1 and the first flipping claw 3.3.1 for joint load-bearing Continued retraction gradually brings the upper flange disc 6.1.1 into contact with the spring box 5.2. After the raising process is completed, the loads from the steel construction platform 1 are transferred to the upper flange 6.1.1, the support frame 5, the load-bearing member 3, the reusable concrete structure-embedded member 2, and finally the main concrete structure in sequence through the support column 7. During the raising process, the loads from the steel construction platform 1 are transferred to the upper flange plate 6.1.2 on the telescoping mechanism 6, the spherical hinge structure 6.3, the bottom of the climbing frame 4, the second flipping claw 4.2.1, the load-bearing member 3, the reusable concrete structure-embedded member 2, and finally the main concrete structure in sequence through the support column 7.

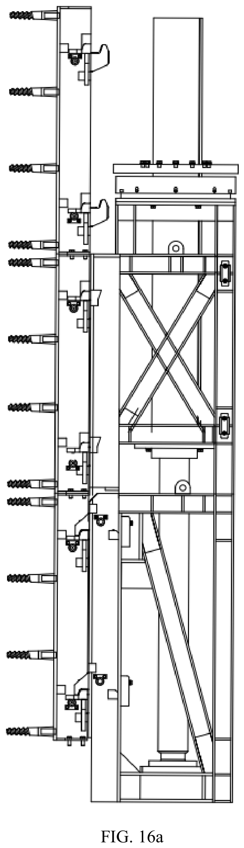

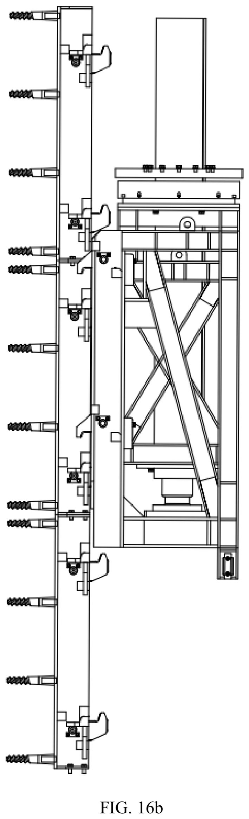

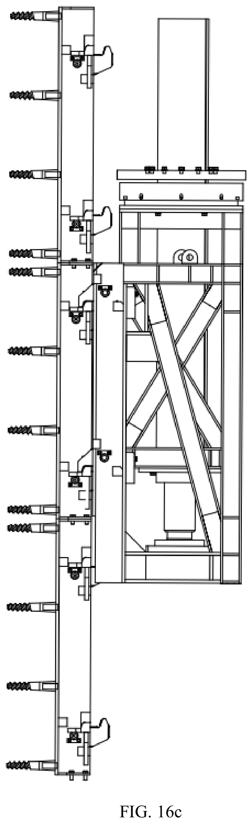

Referring to FIGs. 16a to 16c, when the support frame 5 ascends to the load-bearing member 3 on an upper storey, the telescoping mechanism 6 can drive the climbing frame 4 to move upward. During the raising process, the second flipping claw 4.2.1 of the climbing frame 4 contacts the outer claw shoe 3.4.1 of the load-bearing member 3, causing the second flipping claw 4.2.1 to flip into the climbing frame 4; as the climbing frame 4 continues to ascend, the second flipping claw 4.2.1 is gradually disengaged from the outer claw shoe 3.4.1 and flips under the action of gravity while being limited by the top block to maintain a horizontal state naturally. Subsequently, the telescoping mechanism 6 extends (i.e., the telescoping rod moves downward) to drive the climbing frame 4 to move downward, and the self-aligning structure between the second flipping claw 4.2.1 of the climbing frame 4 and the outer claw shoe 3.4.1 eliminates positional deviations during positioning to achieve automatic alignment into planar contact. During movement, the spherical hinge structure 6.3 remains freely rotatable, ensuring that upon completion of the raising process, the second flipping claw 4.2.1 and the outer claw shoe 3.4.1 achieve multi-surface contact for joint load-bearing. The raising can also be performed in non-full-storey-height increments as needed, and the raising functionality enables the climbing frame 4 to be centred on the load-bearing member 3.

The lowering process of the same-storey framework mutual-climbing-type automatic raising/lowering support system is as follows.

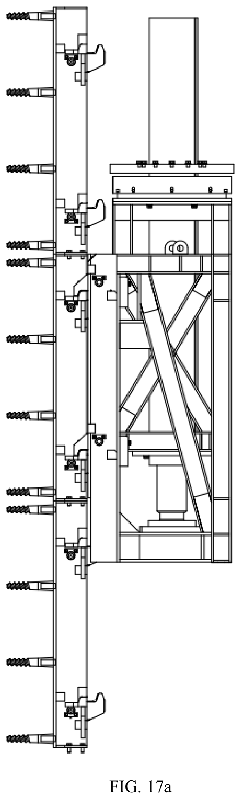

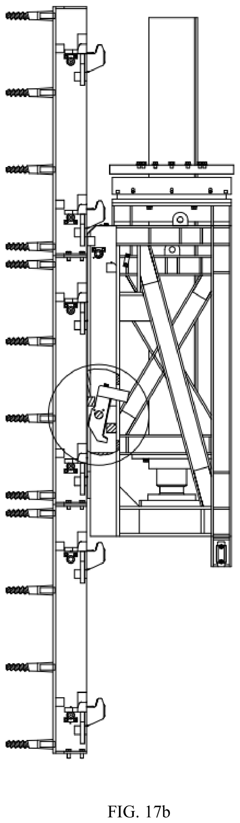

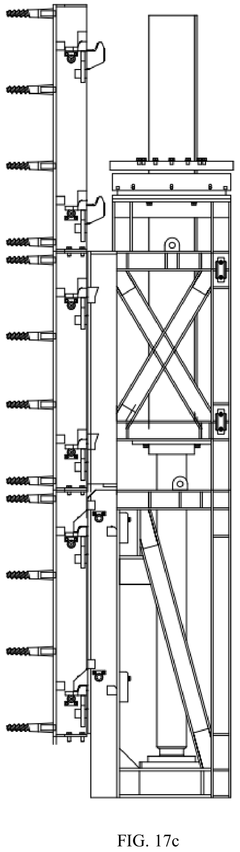

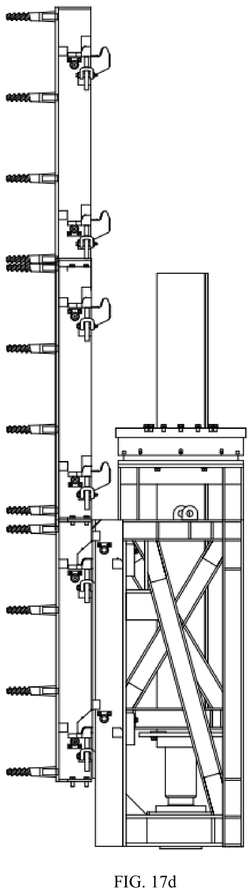

Referring to FIGs. 17a to 17d, first, the telescoping mechanism 6 retracts to raise the climbing frame 4 (the telescoping rod moves upward to disengage the second flipping claw from the outer claw shoe 3.4.1), then the second hexagonal head 4.3.4 is rotated to flip the second flipping claw 4.2.1 into the climbing frame 4 and lock the second flipping claw 4.2.1, after which the telescoping mechanism 6 extends (the telescoping rod moves downward), thereby lowering the climbing frame 4 to the load-bearing member 3 on a lower storey and restoring the second flipping claw 4.2.1 to a horizontal state (i.e., unlocking and returning it to an extended state), enabling the second flipping claw 4.2.1 and the outer claw shoe 3.4.1 to achieve multi-surface contact for joint load-bearing, thus achieving the lowering of the climbing frame 4. After completing the lowering of the climbing frame 4, first, the telescoping mechanism 6 extends (the cylinder body moves upward) to disengage the support frame 5 from the first flipping claw 3.3.1, then the first hexagonal heads 3.5.3 of both the upper and lower layers of load-bearing members 3 are rotated to flip the second flipping claw 4.2.1 into the load-bearing member 3 and lock it, after which the long-stroke telescoping mechanism 6 retracts, thereby lowering the support frame 5 to the load-bearing member 3 on a lower storey and restoring the first flipping claw 3.3.1 to a horizontal state, enabling the first flipping claw 3.3.1 and the inner claw shoe 5.1.1 to achieve multi-surface contact for joint load-bearing, thus achieving the lowering of the support frame 5. The lowering can also be performed in non-full-storey-height increments as needed. Upon completion of the lowering process, the long-stroke telescoping mechanism 6 may also be used to transfer the loads from the steel construction platform 1 to the climbing frame 4, the load-bearing member 3, the reusable concrete structure-embedded members 2, and finally the main concrete structure in sequence.

The same-storey framework mutual-climbing-type automatic raising/lowering support system proposed by this embodiment has the following beneficial effects:
1: the same-storey framework mutual-climbing-type automatic raising/lowering support system integrates three functions in a structure: a same-storey framework, mutual-guided climbing, and proper alignment. The same-storey framework means that the climbing frame 4 and the support frame 5 can be hung on the outer side of the same load-bearing member, allowing installation of the automatic raising/lowering support system after just one storey of the main concrete structure is constructed. Additionally, the automatic raising/lowering support system occupies only one storey, facilitating subsequent construction work such as construction of secondary structures and plastering of exterior walls. The mutual-guided climbing means that the climbing frame 4 and the support frame 5 guide each other during climbing. Specifically, this is achieved through the guide structure (guide grooves 4.1.1), the climbing frame arranged as an outer frame outside the support frame 5, and cooperation with the telescoping mechanism 6. When the climbing frame 4 is not climbing, the support frame 5 climbs using the climbing frame 4 as a pivot point, and when the support frame 5 is not climbing, the climbing frame 4 climbs using the support frame 5 as a pivot point. The proper alignment is achieved through two measures: first, the side plates of the climbing frame 4 ensure that the support frame 5 does not deviate excessively during ascending or descending; second, when minor misalignment occurs during installation, the width of the flipping claw of the first flipping claw assembly 3.3 is smaller than the width of the slot of the inner claw shoe 5.1.1, and the width of the flipping claw of the second flipping claw assembly 4.2 is smaller than the width of the support arm of the outer claw shoe assembly 3.4. Meanwhile, combined with inclined surface structures of the flipping claws, the climbing frame 4 and the support frame 5 utilise the action of gravity and the self-aligning inclined surface structures to eliminate positional deviations during positioning, thereby enabling automatic alignment between the climbing frame 4 and the support frame 5 into planar contact. When major misalignment occurs during installation, the support frame 5's position on the lower flange is adjusted through an external force, enabling engagement between the support frame 5's inner claw shoe 5.1.1 and the first flipping claw assembly 3.3, while allowing adjustment of the second flipping claw 4.2.1's engagement position with the inner claw shoe 5.1.1. Consequently, this ensures precise positioning of the support frame 5 on the load-bearing member 3 during raising/lowering operations;
2: through the combined use of the spherical hinge structure 6.3 and the buffer balancing mechanism, internal forces between structural members are effectively released during operation of the automatic raising/lowering support system. Coordinated with movable connection between the cylinder body and the support frame 5, these two features work together to: ensure accurate positioning of the support frame 5 and the climbing frame 4 on the load-bearing member 3 during raising/lowering operations, and enhance adaptability of the raising/lowering operations to multiple influences including installation deviations, structural construction deviations, and heavy construction loads;
3: the automatic raising/lowering support system enables lowering functionality, which not only expands construction work types (providing working surfaces for subsequent construction work such as construction of secondary structures and plastering of exterior walls) but also facilitates ground-level disassembly of the steel construction platform 1 (the steel construction platform 1 can descend with the support frame 5 to the building base, unlike conventional high-altitude disassembly); and
4: the same-storey framework mutual-climbing-type automatic raising/lowering support system has the advantages of simple structure, easy disassembly, and stable and reliable operation.

The present invention further proposes a climbing apparatus of a same-storey framework mutual-climbing-type automatic raising/lowering support system.

In a preferred embodiment, a climbing apparatus of a same-storey framework mutual-climbing-type automatic raising/lowering support system includes a load-bearing member 3, a climbing frame 4, a telescoping mechanism 6, and a support frame 5, where
the climbing frame 4 and the support frame 5 can be hung on an outer side of the load-bearing member 3; a buffer balancing mechanism is arranged above the support frame 5; and the telescoping mechanism 6 includes a telescoping rod and a cylinder body, where the cylinder body is sleeved outside the telescoping rod and capable of being telescoped relative thereto; a bottom of the telescoping rod is movably connected to a bottom of the climbing frame 4 via a rotating structure; the cylinder body passes through the support frame 5; an upper flange 6.1 is fixed above the cylinder body to abut against a top end surface of the buffer balancing mechanism; a lower flange is fixed below the cylinder body to abut against a bottom end surface of the support frame 5; and the cylinder body and the support frame 5 can move horizontally.

In this embodiment, the buffer balancing mechanism is a spring box 5.2, including a hollow seat body 5.2.1.1, a cover body 5.2.1.2 covering the seat body 5.2.1.1, and a spring 5.2.2 located inside the seat body 5.2.1.1, where a relative distance between the seat body 5.2.1.1 and the cover body 5.2.1.2 is adjusted via the spring 5.2.2.

Further, the spring box 5.2 further includes a guide shaft 5.2.1.3 fixed on the seat body 5.2.1.1 and a limit bolt 5.2.1.4 passing through side surfaces of both the seat body 5.2.1.1 and the cover body 5.2.1.2, where the spring 5.2.2 is sleeved outside the guide shaft 5.2.1.3; a limit hole is formed in the side surface of the cover body 5.2.1.2 for the limit bolt 5.2.1.4 to pass through, such that the limit bolt 5.2.1.4 moves upward/downward relative to the limit hole when the cover body 5.2.1.2 moves relative to the seat body 5.2.1.1; and the seat body 5.2.1.1 and the cover body 5.2.1.2 are hollow to allow the telescoping mechanism 6 to pass through.

A height of the load-bearing member 3 corresponds to one storey height of a concrete wall; the support frame 5 can be accommodated within a recess formed by the climbing frame 4; the climbing frame 4 is provided with a second flipping claw assembly 4.2, while the support frame 5 is provided with an inner claw shoe 5.1.1; at least two rows of outer claw shoe assemblies 3.4 and at least two rows of first flipping claw assemblies 3.3 are arranged along a height direction of the load-bearing member 3; a flipping claw of the second flipping claw assembly 4.2 is shape-matched with a support arm of the outer claw shoe assembly 3.4; and a slot of the inner claw shoe 5.1.1 is shape-matched with a flipping claw of the first flipping claw assembly 3.3.

The flipping claws of both the second flipping claw assembly 4.2 and the first flipping claw assembly 3.3 are provided with a locking mechanism to lock rotation thereof; and an elastic material layer is mounted on contact surfaces of the flipping claws via a fastener.

In this embodiment, the locking mechanism includes a limit baffle; a pivot shaft is inserted through the flipping claws to enable rotation thereof, with a limit groove disposed at a head of the pivot shaft; the limit baffle is inserted into the limit groove to restrict rotation of the pivot shaft; a width of the flipping claw of the first flipping claw assembly 3.3 is smaller than a width of the slot of the inner claw shoe 5.1.1; and a width of the flipping claw of the second flipping claw assembly 4.2 is smaller than a width of the support arm of the outer claw shoe assembly 3.4.

The rotating structure is a spherical hinge structure. In this embodiment, the climbing frame 4 and the support frame 5 can be hung on the outer side of the same load-bearing member, specifically achieved through the following configuration: the climbing frame 4 includes two side plates and a base connecting the two side plates; the support frame 5 is located within a concave space formed by the two side plates and the base, and is hung on the outer side of the load-bearing member 3; and a mounting slot 4.4.1 is formed on the base, with the spherical hinge structure adjustably positioned within the mounting slot 4.4.1.

The climbing apparatus of the same-storey framework mutual-climbing-type automatic raising/lowering support system proposed by this embodiment has the following beneficial effects:
1: due to movable connection between the cylinder body and the support frame 5, the support frame 5's position on the lower flange is adjusted through an external force, enabling engagement between the support frame 5's inner claw shoe 5.1.1 and the first flipping claw assembly 3.3, while allowing adjustment of the second flipping claw 4.2.1's engagement position with the inner claw shoe 5.1.1. Consequently, this ensures precise positioning of the support frame 5 on the load-bearing member 3 during raising/lowering operations;
2: through the combined use of the spherical hinge structure 6.3 and the buffer balancing mechanism, internal forces between structural members are effectively released during operation of the automatic raising/lowering support system. Coordinated with movable connection between the cylinder body and the support frame 5, these two features work together to: ensure accurate positioning of the support frame 5 and the climbing frame 4 on the load-bearing member 3 during raising/lowering operations, and enhance adaptability of the raising/lowering operations to multiple influences including installation deviations, structural construction deviations, and heavy construction loads (construction deviations and heavy construction loads constitute external factors of misalignment, while insufficient internal guide/alignment structures constitute internal factors; the present application improves both the external and internal factors to ensure proper alignment);
3: the support frame 5 is accommodated within the climbing frame 4, allowing both to be integrated and installed on the same storey, thereby solving the problem of conventional automatic raising/lowering support systems being unable to install and operate within the same structural storey; this enables earlier involvement of the steel construction platform 1 in construction of the main concrete structure, enhances the steel construction platform 1's adaptability to construction requirements and work efficiency, and shortens the construction period of the main structure;
4: the climbing apparatus enables lowering functionality, which not only expands construction work types (providing working surfaces for subsequent construction work such as construction of secondary structures and plastering of exterior walls) but also facilitates ground-level disassembly of the steel construction platform 1 (the steel construction platform 1 can descend with the support frame 5 to the building base, unlike conventional high-altitude disassembly); and
5: the climbing apparatus has the advantages of simple structure, easy disassembly, and stable and reliable operation.

The present invention further proposes a raising method for a same-storey framework mutual-climbing-type automatic raising/lowering support system.

In a preferred embodiment, a raising method based on the same-storey framework mutual-climbing-type automatic raising/lowering support system described above includes the following steps:
S10: controlling the cylinder body of the telescoping mechanism 6 to rise, where the lower flange below the cylinder body abuts against the bottom end surface of the support frame 5 to drive the entire support frame 5 to ascend;
S20: after the support frame 5 ascends in place, retracting the cylinder body downward and engaging the first flipping claw assembly 3.3 with the inner claw shoe 5.1.1 to hang the support frame 5 on the outer side of the load-bearing member 3;
S30: controlling the telescoping rod of the telescoping mechanism 6 to retract relative to the cylinder body, thereby driving the entire climbing frame 4 to ascend; and
S40: after the climbing frame 4 ascends in place, causing the flipping claw of the second flipping claw assembly 4.2 to rest on the outer claw shoe assembly 3.4 of the load-bearing member 3 by extending the telescoping rod downward, thereby hanging the climbing frame 4 on the outer side of the load-bearing member 3.

The raising method proposed by the present invention is easy to operate. The support frame 5 is accommodated within the climbing frame 4, allowing both to be integrated and installed on the same storey, thereby solving the problem of conventional automatic raising/lowering support systems being unable to install and operate within the same structural storey; this enables earlier involvement of the steel construction platform 1 in construction of the main concrete structure, enhances the steel construction platform 1's adaptability to construction requirements and work efficiency, and shortens the construction period of the main structure.

The present invention further proposes a lowering method for a same-storey framework mutual-climbing-type automatic raising/lowering support system.

In a preferred embodiment, a lowering method based on the same-storey framework mutual-climbing-type automatic raising/lowering support system described above includes the following steps:
S101: controlling the telescoping rod of the telescoping mechanism 6 to extend upward to drive the climbing frame 4 to ascend, thereby causing the flipping claw of the second flipping claw assembly 4.2 to be disengaged from the outer claw shoe assembly 3.4, rotating the flipping claw of the second flipping claw assembly 4.2 to retract it into the climbing frame 4 before locking it, and then controlling the telescoping rod to extend downward to drive the climbing frame 4 to descend;
S102: after the climbing frame 4 descends in place, unlocking the flipping claw of the second flipping claw assembly 4.2, thereby causing it to naturally extend into a horizontal state (the flipping claw of the second flipping claw assembly 4.2 is naturally in a horizontal state under the action of gravity), and controlling the telescoping rod to move, thereby causing the flipping claw of the second flipping claw assembly 4.2 to rest above the outer claw shoe assembly 3.4;
S103: controlling the cylinder body of the telescoping mechanism 6 to extend upward, thereby causing the flipping claw of the first flipping claw assembly 3.3 to be disengaged from the inner claw shoe 5.1.1, rotating the flipping claw of the first flipping claw assembly 3.3 to retract it into the load-bearing member 3 before locking it, and then controlling the cylinder body to move downward to drive the support frame 5 to descend; and
S104: after the support frame 5 descends in place, unlocking the flipping claw of the first flipping claw assembly 3.3, thereby causing it to naturally extend into a horizontal state, and controlling the cylinder body to move to engage the flipping claw of the first flipping claw assembly 3.3 with the slot of the inner claw shoe 5.1.1, thereby hanging the climbing frame 4 on the outer side of the load-bearing member 3.

The lowering method for the same-storey framework mutual-climbing-type automatic raising/lowering support system proposed by the present invention, by driving the steel construction platform 1 to descend through the support frame 5, not only expands construction work types (providing working surfaces for subsequent construction work such as construction of secondary structures and plastering of exterior walls) but also facilitates ground-level disassembly of the steel construction platform 1 (the steel construction platform 1 can descend with the support frame 5 to the building base, unlike conventional high-altitude disassembly).

The above-described embodiments are only preferred embodiments of the present invention and do not limit the patent protection scope of the present invention. Any equivalent structural transformations based on the content of the specification and accompanying drawings of the present invention, or direct or indirect application of the above-described embodiments in other related technical fields are all included in the patent protection scope of the present invention for the same reason.

## Claims

1. A climbing apparatus of a same-storey framework mutual-climbing-type automatic raising/lowering support system, **characterised by** comprising a load-bearing member, a climbing frame, a telescoping mechanism, and a support frame, wherein
the climbing frame and the support frame can be hung on an outer side of the same load-bearing member; a guide structure is arranged between the climbing frame and the support frame to achieve mutual-guided climbing; a buffer balancing mechanism is arranged above the support frame; and the telescoping mechanism comprises a cylinder body and a telescoping rod, wherein a bottom of the telescoping rod is movably connected to a bottom of the climbing frame via a rotating structure; the cylinder body passes through an inner cavity of the support frame; an upper flange is fixed above the cylinder body to abut against a top end surface of the buffer balancing mechanism; a lower flange is fixed below the cylinder body to abut against a bottom end surface of the support frame; and the cylinder body and the support frame can move horizontally.

2. The climbing apparatus of the same-storey framework mutual-climbing-type automatic raising/lowering support system according to claim 1, **characterised in that** the buffer balancing mechanism is a spring box, comprising a hollow seat body, a cover body covering the seat body, and a spring located inside the seat body, wherein a relative distance between the seat body and the cover body is adjusted via the spring.

3. The climbing apparatus of the same-storey framework mutual-climbing-type automatic raising/lowering support system according to claim 2, **characterised in that** the spring box further comprises a guide shaft fixed on the seat body and a limit bolt passing through side surfaces of both the seat body and the cover body, wherein the spring is sleeved outside the guide shaft; a limit hole is formed in the side surface of the cover body for the limit bolt to pass through, such that the limit bolt restricts a maximum displacement of the cover body when the cover body moves relative to the seat body; and the seat body and the cover body are hollow to allow the cylinder body to pass through.

4. The climbing apparatus of the same-storey framework mutual-climbing-type automatic raising/lowering support system according to claim 1, **characterised in that** the support frame is accommodatable in a recess formed by the climbing frame, enabling the climbing frame and the telescoping mechanism to be simultaneously hung on the outer side of the same load-bearing member; the load-bearing member is provided with an outer claw shoe assembly and a first flipping claw assembly; the climbing frame is provided with a second flipping claw assembly engaged with a support arm of the outer claw shoe assembly; and the support frame is provided with an inner claw shoe engaged with the first flipping claw assembly.

5. The climbing apparatus of the same-storey framework mutual-climbing-type automatic raising/lowering support system according to claim 4, **characterised in that** a height of the load-bearing member corresponds to one storey height of a concrete wall; flipping claws of both the second flipping claw assembly and the first flipping claw assembly are provided with a locking mechanism to lock rotation thereof; and an elastic material layer is mounted on contact surfaces of the flipping claws via a fastener.

6. The climbing apparatus of the same-storey framework mutual-climbing-type automatic raising/lowering support system according to claim 5, **characterised in that** the locking mechanism comprises a limit baffle; a pivot shaft is inserted through the flipping claws to enable rotation thereof, with a limit groove disposed at a head of the pivot shaft; the limit baffle is inserted into the limit groove to restrict rotation of the pivot shaft; a width of the flipping claw of the first flipping claw assembly is smaller than a width of a slot of the inner claw shoe; and a width of the flipping claw of the second flipping claw assembly is smaller than a width of the support arm of the outer claw shoe assembly.

7. The climbing apparatus of the same-storey framework mutual-climbing-type automatic raising/lowering support system according to any one of claims 1-6, **characterised in that** the climbing frame comprises two side plates and a base connecting the two side plates; the support frame is located within a concave space formed by the two side plates and the base, and is hung on the outer side of the load-bearing member; a mounting slot is formed on the base, with the rotating structure adjustably positioned within the mounting slot; and the guide structure comprises a guide assembly disposed on a side surface of the support frame and guide grooves disposed on mutually facing sides of the two side plates of the climbing frame, wherein the guide assembly is accommodated within the guide grooves to guide raising/lowering of the support frame.

8. A same-storey framework mutual-climbing-type automatic raising/lowering support system, **characterised by** comprising the climbing apparatus according to any one of claims 1-7, and further comprising a support column, wherein a bottom end of the support column is rigidly connected to the upper flange of the cylinder body of the telescoping mechanism; and a top end of the support column is rigidly connected to a steel construction platform.

9. A raising method based on the same-storey framework mutual-climbing-type automatic raising/lowering support system according to claim 8, **characterised by** comprising the following steps:
controlling the cylinder body of the telescoping mechanism to rise, wherein the lower flange below the cylinder body abuts against the bottom end surface of the support frame to drive the entire support frame to ascend;
after the support frame ascends in place, retracting the cylinder body downward and engaging the first flipping claw assembly with the inner claw shoe to hang the support frame on the outer side of the load-bearing member;
controlling the telescoping rod of the telescoping mechanism to retract relative to the cylinder body, thereby driving the entire climbing frame to ascend; and
after the climbing frame ascends in place, causing the flipping claw of the second flipping claw assembly to rest on the outer claw shoe assembly of the load-bearing member by extending the telescoping rod downward, thereby hanging the climbing frame on the outer side of the load-bearing member.

10. A lowering method based on the same-storey framework mutual-climbing-type automatic raising/lowering support system according to claim 8, **characterised by** comprising the following steps:
controlling the telescoping rod of the telescoping mechanism to extend upward to drive the climbing frame to ascend, thereby causing the flipping claw of the second flipping claw assembly to be disengaged from the outer claw shoe assembly, rotating the flipping claw of the second flipping claw assembly to retract it into the climbing frame before locking it, and then controlling the telescoping rod of the telescoping mechanism to extend downward to drive the climbing frame to descend;
after the climbing frame descends in place, unlocking the flipping claw of the second flipping claw assembly, thereby causing it to naturally extend into a horizontal state, and controlling the telescoping rod to move, thereby causing the flipping claw of the second flipping claw assembly to rest above the outer claw shoe assembly;
controlling the cylinder body to extend upward, thereby causing the flipping claw of the first flipping claw assembly to be disengaged from the inner claw shoe, rotating the flipping claw of the first flipping claw assembly to retract it into the load-bearing member before locking it, and then controlling the cylinder body to move downward to drive the support frame to descend; and
after the support frame descends in place, unlocking the flipping claw of the first flipping claw assembly, thereby causing it to naturally extend into a horizontal state, and controlling the cylinder body of the telescoping mechanism to move to engage the flipping claw of the first flipping claw assembly with the slot of the inner claw shoe, thereby hanging the climbing frame on the outer side of the load-bearing member.
